# EUROPEAN PATENT SPECIFICATION

(11) **EP 4 122 962 B1**
(45) Date of publication and mention of the grant of the patent: **12.08.2026**
(21) Application number: 21771558.0
(22) Date of filing: 10.03.2021
(51) Int. Cl.: C08F 8/00, C08F 236/06, H01M 4/139, H01M 4/62, H01M 10/0562, H01M 10/058, H01M 4/04

(54) **BINDER COMPOSITION FOR ALL-SOLID-STATE SECONDARY BATTERIES, SLURRY FOR ALL-SOLID-STATE SECONDARY BATTERIES, SOLID ELECTROLYTE SHEET FOR ALL-SOLID-STATE SECONDARY BATTERIES, METHOD FOR PRODUCING SAID SOLID ELECTROLYTE SHEET FOR ALL-SOLID-STATE SECONDARY BATTERIES, ALL-SOLID-STATE SECONDARY BATTERY, AND METHOD FOR PRODUCING SAID ALL-SOLID-STATE SECONDARY BATTERY**
BINDEMITTELZUSAMMENSETZUNG FÜR FESTKÖRPERSEKUNDÄRBATTERIEN, SCHLAMM FÜR FESTKÖRPERSEKUNDÄRBATTERIEN, FESTELEKTROLYTFOLIE FÜR FESTKÖRPERSEKUNDÄRBATTERIEN UND VERFAHREN ZUR HERSTELLUNG
COMPOSITION DE LIANT POUR BATTERIES SECONDAIRES ENTIÈREMENT SOLIDES, BOUE POUR BATTERIES SECONDAIRES ENTIÈREMENT SOLIDES, FEUILLE D'ÉLECTROLYTE SOLIDE POUR BATTERIES SECONDAIRES ENTIÈREMENT SOLIDES, PROCÉDÉ DE FABRICATION DE LADITE FEUILLE D'ÉLECTROLYTE SOLIDE POUR BATTERIES SECONDAIRES ENTIÈREMENT SOLIDES, BATTERIE SECONDAIRE ENTIÈREMENT SOLIDE ET PROCÉDÉ DE FABRICATION DE LADITE BATTERIE SECONDAIRE ENTIÈREMENT SOLIDE

(30) Priority: 17.03.2020 JP 2020046275
(43) Date of publication of application: 25.01.2023
(73) Proprietor: ENEOS Materials Corporation, Tokyo 105-7109 (JP)
(72) Inventor: ABE, Tatsuya, Tokyo 105-8640 (JP); ASO, Keigo, Tokyo 105-8640 (JP); ITAI, Shingo, Tokyo 105-8640 (JP); IIDA, Masashi, Tokyo 105-8640 (JP)
(74) Representative: TBK
(86) International application number: PCT/JP2021/009552
(87) International publication number: WO 2021/187273

(56) References cited:
- EP-A1- 2 869 372
- EP-A2- 1 245 585
- WO-A1-2011/086983
- WO-A1-2012/026462
- WO-A1-2018/163776
- WO-A1-2019/194192
- WO-A1-2020/036055
- JP-A- 2008 106 215
- JP-A- 2012 014 920
- JP-A- 2012 099 251
- JP-A- 2018 088 306
- JP-A- 2019 525 428
- KR-A- 20080 062 966

## Description

### TECHNICAL FIELD

The present invention relates to a binder composition for an all-solid-state secondary battery, a slurry for an all-solid-state secondary battery containing the composition and a solid electrolyte, a solid electrolyte sheet for an all-solid-state secondary battery formed by applying the slurry onto a substrate and drying the slurry and a method of producing the same, and to an all-solid-state secondary battery including the sheet and a method of producing the same.

### BACKGROUND ART

Many of lithium ion secondary batteries, widely used in a driving power source for an automobile or the like, a household storage battery, and the like, use an electrolytic solution. At present, an all-solid-state secondary battery, which uses a solid electrolyte in place of the electrolytic solution, and whose constituent materials are all solids, is being developed as an ultimate battery that combines safety with a high energy density and a long life.

The all-solid-state secondary battery uses the solid electrolyte showing high ion conductivity, and hence is free of dangers of liquid leakage and ignition, thereby being excellent in safety and reliability. In addition, the all-solid-state secondary battery is also suited for an increase in energy density through stacking of electrodes. Specifically, the all-solid-state secondary battery can be a battery having a structure in which an active material layer and a solid electrolyte layer are arranged side by side and serialized. In this case, a metal package for encapsulating a battery cell, and a copper wire and a busbar for connecting battery cells can be omitted, and hence the energy density of the battery can be greatly increased. In addition, for example, good compatibility with a positive electrode material capable of achieving an increase in potential is also given as an advantage.

On the other hand, problems in production of the all-solid-state secondary battery have also become apparent. Specifically, when a pressure-molded body of a mixture obtained by mixing the solid electrolyte serving as an electrolyte and an active material is prepared in order to increase a contact area therebetween, the pressure-molded body is hard and brittle and is poor in processability. In addition, the active material undergoes a volume change through storage and release of lithium ions, and hence has had a problem in the pressure-molded body, such as occurrence of a remarkable reduction in capacity due to, for example, peeling of the active material along with charge-discharge cycles.

In view of the foregoing, in order to enhance moldability, investigations have been made on a technology involving further adding a binder component to the above-mentioned mixture to improve the moldability (see, for example, Patent Literatures 1 to 4).

### CITATION LIST

### Patent Literature

[PTL 1] JP 11-86899 A
[PTL 2] JP 07-87045 B2
[PTL 3] WO 2009/107784 A1
[PTL 4] JP 5120522 B2

EP 2 869 372 A1 describes a negative electrode slurry composition including a binder resin, a water-soluble polymer, and a negative electrode active material, wherein the binder resin including (A) a styrene-butadiene copolymer latex having a gel amount of 70 to 98% and a glass transition temperature of -30°C to 60°C in dynamic viscoelasticity measurement and (B) an acryl polymer latex having a gel amount of 70 to 98% and a glass transition temperature of -100°C to 0°C.

EP 1 245 585 A2 describes a hydrogenated modified polymer obtained by hydrogenating a modified polymer having at least one primary amino group and/or at least one secondary amino group in a conjugated diene-based polymer obtained by anion-polymerizing a conjugated diene or a conjugated diene and another monomer. A hydrogenated modified polymer obtained by polymerizing a conjugated diene or a conjugated diene and another monomer using an organic alkali metal compound as a polymerization initiator, adding an alkoxysilane compound to the resulting conjugated diene-based polymer to terminate the reaction to obtain a modified polymer, which is hydrogenated.

WO 2012/026462 A1 describes a binder composition for a secondary battery negative electrode.

JP 2008 106215 A describes a carbon binder containing a polymer obtained by polymerizing polymerizable monomers containing a conjugated diene compound, an aromatic vinyl compound and an ethylenic unsaturated carboxylic acid, and an oxidation inhibitor.

KR 2008 0062966 A describes a binder for the preparation of a secondary battery comprising 100 parts by weight of a binder polymer; and 0.1-30 parts by weight of an antioxidizing agent.

WO 2011/086983 A1 describes a binder composition for an all-solid-state battery and an all-solid-state battery binder composition

JP 2012 014920 A describes a binder for a secondary cell including a polymer obtained by polymerizing a monomer composition including a conjugate diene monomer and an acid-based monomer whose ratio is 5-20 wt.%, in a water-based medium using a water-soluble polymerization initiator.

JP 2012 099251 A describes an anode for a lithium secondary battery, which comprises: a conducting agent; an acrylic polymer including a monomer unit coming from alkyl ester of (meth)acrylic acid, and a monomer unit coming from α,β-unsaturated nitrile compound; a hydrogenated block copolymer of an aromatic vinyl compound and a conjugated diene, which contains 35-75 wt.% of monomer unit coming from the aromatic vinyl compound inclusive, and not more than 15 mol% of 1,2-bond unit in a monomer unit coming from the conjugated diene, with not less than 70 mol% of the monomer unit coming from the conjugated diene hydrogenated.

### SUMMARY OF INVENTION

### Technical Problem

A composition or slurry containing the binder component disclosed in each of Patent Literatures 1 to 4 described above has had a problem in that the storage stability thereof is liable to be impaired owing to deterioration over time of a polymer serving as the binder component. In addition, also when the composition or the slurry is turned into an all-solid-state secondary battery, the polymer is deteriorated over time through the repetition of charge and discharge, and hence ionic conduction between solid electrolytes is liable to be inhibited, and besides, a high-level cycle life characteristic under a high voltage required of a current all-solid-state secondary battery cannot be satisfied. Accordingly, further improvements have been required.

**In** view of the foregoing, some aspects according to the present invention provide a binder composition for an all-solid-state secondary battery, which is excellent in long-term storage stability and also excellent in lithium ion conductivity, and is capable of achieving a satisfactory cycle life characteristic even under a high voltage.

### Solution to Problem

The present invention has been made in order to solve at least part of the above-mentioned problems, and can be realized as any one of the following aspects.

According to one aspect of the present invention, there is provided a binder composition for an all-solid-state secondary battery as defined in claim 1.

In the binder composition for an all-solid-state secondary battery according to any one of the above-mentioned aspects, the polymer (A) may have a unit based on a modifier containing at least one kind of atom selected from the group consisting of: a nitrogen atom; an oxygen atom; a silicon atom; a germanium atom; and a tin atom.

In the binder composition for an all-solid-state secondary battery according to any one of the above-mentioned aspects, the liquid medium (C) may be at least one kind selected from the group consisting of: an aliphatic hydrocarbon; an alicyclic hydrocarbon; an aromatic hydrocarbon; ketones; esters; and ethers.

In the binder composition for an all-solid-state secondary battery according to any one of the above-mentioned aspects, the polymer (A) may be dissolved in the liquid medium (C).

According to one aspect of the present invention, there is provided a slurry for an all-solid-state secondary battery, including: the binder composition for an all-solid-state secondary battery of any one of the above-mentioned aspects; and a solid electrolyte.

The slurry for an all-solid-state secondary battery according to the one aspect may include, as the solid electrolyte, a sulfide-based solid electrolyte or an oxide-based solid electrolyte.

According to one aspect of the present invention, there is provided an all-solid-state secondary battery, including at least: a positive electrode active material layer; a solid electrolyte layer; and a negative electrode active material layer, wherein at least any one of the positive electrode active material layer, the solid electrolyte layer, and the negative electrode active material layer is a layer formed by applying and drying the slurry for an all-solid-state secondary battery of any one of the above-mentioned aspects.

According to one aspect of the present invention, there is provided a solid electrolyte sheet for an all-solid-state secondary battery, including: a substrate; and a layer formed on the substrate by applying and drying the slurry for an all-solid-state secondary battery of any one of the above-mentioned aspects.

According to one aspect of the present invention, there is provided a method of producing a solid electrolyte sheet for an all-solid-state secondary battery, including a step including applying the slurry for an all-solid-state secondary battery of any one of the above-mentioned aspects onto a substrate and drying the slurry.

According to one aspect of the present invention, there is provided a method of producing an all-solid-state secondary battery, including producing an all-solid-state secondary battery via the method of producing a solid electrolyte sheet for an all-solid-state secondary battery of the one aspect.

### ADVANTAGEOUS EFFECTS OF INVENTION

The binder composition for an all-solid-state secondary battery according to the present invention allows the polymer serving as its binder component to have satisfactory long-term storage stability. In addition, also when the binder composition is turned into an all-solid-state secondary battery, the deterioration over time of the polymer due to the repetition of charge and discharge can be reduced, and hence the all-solid-state secondary battery excellent in lithium ion conductivity and capable of achieving a satisfactory cycle life characteristic even under a high voltage can be produced.

### DESCRIPTION OF EMBODIMENTS

Preferred embodiments of the present invention are described in detail below. It should be appreciated that the present invention is not limited to the embodiments described below, and includes various modification examples performed within the range not changing the gist of the present invention. Herein, "··· (meth)acrylate" is a concept comprehending both of "··· acrylate" and "··· methacrylate".

Herein, a numerical range described like "from A to B" is to be construed to include a numerical value A as a lower limit value and a numerical value B as an upper limit value.

### 1. Binder Composition for All-solid-state Secondary Battery

A binder composition for an all-solid-state secondary battery according to one embodiment of the present invention contains: a polymer (A) having an aromatic vinyl unit based on an aromatic vinyl compound and a conjugated diene unit based on a conjugated diene compound; an anti-aging agent (B) at 200 ppm or more and 5,000 ppm or less with respect to a total mass of the binder composition for an all-solid-state secondary battery; and a liquid medium (C). The binder composition for an all-solid-state secondary battery according to this embodiment may further contain an optional component to the extent that the effects of the present invention are not impaired. The components contained in the binder composition for an all-solid-state secondary battery according to this embodiment are described in detail below.

### 1.1. Polymer (A)

The binder composition for an all-solid-state secondary battery according to this embodiment contains the polymer (A). The polymer (A) has an aromatic vinyl unit based on an aromatic vinyl compound and a conjugated diene unit based on a conjugated diene compound. The polymer (A) may contain, in addition to the aromatic vinyl unit and the conjugated diene unit, a structural unit based on another monomer copolymerizable therewith. The order in which the structural units of the polymer (A) are arranged is not particularly limited. That is, the polymer (A) may be a block copolymer, or may be a random copolymer.

A method of producing the polymer (A) and the physical properties of the polymer (A) are described below in the stated order.

### 1.1.1. Method of producing Polymer (A)

The polymer (A) may be produced by, for example, a method including the steps of: polymerizing the aromatic vinyl compound and the conjugated diene compound to obtain a conjugated diene-based copolymer having an active end (polymerization step); modifying the end of the obtained conjugated diene-based copolymer (modification step); and hydrogenating the conjugated diene-based copolymer (hydrogenation step). Specifically, the polymer (A) may be produced in accordance with a method described in WO 2014/133097 A1 with changes appropriately made in molecular weight, amount of the aromatic vinyl compound, vinyl bond content, hydrogenation ratio, kind of modifier, and the like so as to fit the intended use. The method of producing the polymer (A) is described in detail below.

### <Polymerization Step>

The polymerization step is a step of polymerizing monomers including the aromatic vinyl compound and the conjugated diene compound to obtain a conjugated diene-based copolymer having an active end. Any of a solution polymerization method, a vapor phase polymerization method, and a bulk polymerization method may be used as a polymerization method for obtaining the conjugated diene-based copolymer, but the solution polymerization method is particularly preferred. In addition, any of a batch system and a continuous system may be used as a mode of polymerization. When the solution polymerization method is used, a specific example of the polymerization method is a method involving polymerizing monomers including the aromatic vinyl compound and the conjugated diene compound in an organic solvent in the presence of a polymerization initiator and a vinyl control agent (hereinafter sometimes referred to as "randomizer") which is used as required.

Examples of the aromatic vinyl compound include styrene, divinylbenzene, 2-methylstyrene, 3-methylstyrene, 4-methylstyrene, α-methylstyrene, N,N-dimethylaminoethylstyrene, and diphenylethylene. Of those, one or more kinds of compounds selected from styrene and divinylbenzene are particularly preferred as the aromatic vinyl compound. The aromatic vinyl compounds may be used alone or in combination thereof.

As the conjugated diene compound, in addition to 1,3-butadiene, a conjugated diene compound other than 1,3-butadiene may be used. Such conjugated diene compound is not particularly limited as long as the compound is copolymerizable with 1,3-butadiene and an aromatic vinyl compound, and examples thereof include isoprene, 2,3-dimethyl-1,3-butadiene, and 1,3-pentadiene. Of those, isoprene is preferred as the conjugated diene compound other than 1,3-butadiene. The conjugated diene compounds may be used alone or in combination thereof.

The conjugated diene-based copolymer to be obtained through the polymerization step may be a copolymer of 1,3-butadiene and the aromatic vinyl compound, or may be a copolymer of 1,3-butadiene, the conjugated diene compound other than 1,3-butadiene, and the aromatic vinyl compound. In order to have a high living property in anionic polymerization, the conjugated diene-based copolymer is preferably a copolymer using 1,3-butadiene and styrene.

In the conjugated diene-based copolymer to be obtained through the polymerization step, the content of the aromatic vinyl compound is from 5 mass% to 40 mass%, preferably from 8 mass% to 30 mass%, more preferably from 10 mass% to 27 mass% with respect to the total amount of the monomers used for the polymerization. In addition, when the content of the aromatic vinyl compound is set to fall within the above-mentioned ranges, the adhesiveness and flexibility of an electrode can both be achieved. The monomers to be used for the production of the conjugated diene-based copolymer before hydrogenation preferably include 60 parts by mass to 95 parts by mass of butadiene, 5 parts by mass to 40 parts by mass of the aromatic vinyl compound, and 0 parts by mass to 35 parts by mass of the conjugated diene compound other than butadiene. The adoption of such blending amounts is preferred because the adhesiveness and flexibility of an electrode can both be achieved.

A monomer other than the aromatic vinyl compound and the conjugated diene compound may be used in the polymerization. Examples of the other monomer include acrylonitrile, methyl (meth)acrylate, and ethyl (meth)acrylate. The use amount of the other monomer is preferably 20 mass% or less, more preferably 18 mass% or less, particularly preferably 15 mass% or less with respect to the total amount of the monomers to be used for the polymerization.

At least any one of an alkali metal compound and an alkaline earth metal compound may be used as the polymerization initiator. A compound that is generally used as an initiator for anionic polymerization may be used as each of the alkali metal compound and the alkaline earth metal compound, and examples thereof include alkyllithiums, such as methyllithium, ethyllithium, n-propyllithium, n-butyllithium, sec-butyllithium, and tert-butyllithium, 1,4-dilithiobutane, phenyllithium, stilbenelithium, naphthyllithium, naphthylsodium, naphthylpotassium, di-n-butylmagnesium, di-n-hexylmagnesium, ethoxypotassium, and calcium stearate. Of those, a lithium compound is preferred.

**In** addition, the polymerization reaction may be performed in the presence of a compound (hereinafter sometimes referred to as "compound (R)") obtained by mixing at least any one of the alkali metal compound and the alkaline earth metal compound with a compound for introducing a functional group that interacts with a current collector, a solid electrolyte, or the like into a polymerization initiation end (hereinafter sometimes referred to as "compound (C1)"). When the polymerization is performed in the presence of the compound (R), the functional group that interacts with a current collector, a solid electrolyte, or the like can be introduced into the polymerization initiation end of the conjugated diene-based copolymer. Herein, the "interaction" means the formation of a covalent bond between molecules, or the formation of an intermolecular force weaker than a covalent bond (e.g., an electromagnetic force acting between molecules, such as an ion-dipole interaction, a dipole-dipole interaction, a hydrogen bond, or a van der Waals force). **In** addition, the "functional group that interacts with a current collector, a solid electrolyte, or the like" refers to a group containing at least one atom, such as a nitrogen atom, an oxygen atom, a silicon atom, a sulfur atom, or a phosphorus atom.

The above-mentioned compound (C1) is not particularly limited as long as the compound has a partial structure in which a nitrogen atom, an oxygen atom, a silicon atom, a sulfur atom, or a phosphorus atom is directly bonded to a hydrogen atom. As the compound (C1), there may be used, for example, a nitrogen-containing compound such as a secondary amine, a compound having a hydroxy group, a silicon-containing compound such as a tertiary silane, a compound having a thiol group, or a compound such as a secondary phosphine. Of those, a nitrogen-containing compound such as a secondary amine compound is preferred. Specific examples of the nitrogen-containing compound include dimethylamine, diethylamine, dipropylamine, dibutylamine, dipentylamine, dioctylamine, dihexylamine, dodecamethyleneimine, N,N'-dimethyl-N'-trimethylsilyl-1,6-diaminohexane, piperidine, 3,3-dimethylpiperidine, 2,6-dimethylpiperidine, 1-methyl-4-(methylamino)piperidine, 2,2,6,6-tetramethylpiperidine, pyrrolidine, piperazine, 2,6-dimethylpiperazine, 1-ethylpiperazine, 2-methylpiperazine, 1-benzylpiperazine, 2,6-dimethylmorpholine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tert-butyldimethylsilyl)piperazine, N'-[2-N,N-bis(trimethylsilyl)aminoethyl]piperazine, 1,3-ditrimethylsilyl-1,3,5-triazinane, 5-benzyloxyindole, and 3-azaspiro[5,5]undecane.

The above-mentioned compound (R) is, in particular, preferably a reaction product between a lithium compound such as an alkyllithium and the compound (C1). When the polymerization is performed in the presence of the compound (R), the polymerization may be performed by mixing the alkali metal compound or the alkaline earth metal compound with the compound (C1) in advance to prepare the compound (R), and adding the prepared compound (R) into the polymerization system. Alternatively, the polymerization may be performed as follows: the alkali metal compound or the alkaline earth metal compound, and the compound (C1) are added into the polymerization system, and are mixed with each other in the polymerization system to prepare the compound (R).

The randomizer may be used for the purpose of, for example, adjusting a content ratio of the vinyl bonds (vinyl bond content). Examples of the randomizer include dimethoxybenzene, tetrahydrofuran, dimethoxyethane, ethylene glycol diethyl ether, ethylene glycol dibutyl ether, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, and tetramethylethylenediamine. Those randomizers may be used alone or in combination thereof.

The organic solvent to be used for the polymerization only needs to be an organic solvent inert to the reaction, and for example, an aliphatic hydrocarbon, an alicyclic hydrocarbon, or an aromatic hydrocarbon may be used. Of those, a hydrocarbon having 3 to 8 carbon atoms is preferred, and specific examples thereof include n-pentane, isopentane, n-hexane, n-heptane, cyclohexane, propene, 1-butene, isobutene, trans-2-butene, cis-2-butene, 1-pentyne, 2-pentyne, 1-hexene, 2-hexene, benzene, toluene, xylene, ethylbenzene, cyclopentane, methylcyclopentane, methylcyclohexane, 1-pentene, 2-pentene, and cyclohexene. The organic solvents may be used alone or in combination thereof.

When solution polymerization is used, the concentration of the monomers in the reaction solvent is preferably from 5 mass% to 50 mass%, more preferably from 10 mass% to 30 mass% because a balance between productivity and ease of polymerization control can be maintained. The temperature of the polymerization reaction is preferably from -20°C to 150°C, more preferably from 0°C to 120°C, particularly preferably from 20°C to 100°C. In addition, the polymerization reaction is preferably performed under a pressure sufficient for keeping the monomers substantially in a liquid phase. Such pressure may be obtained by a method involving, for example, pressurizing the inside of a reactor with a gas inert to the polymerization reaction.

With regard to the conjugated diene-based copolymer to be obtained through the polymerization described above, a 1,2-vinyl bond content in the structural unit derived from butadiene is preferably from 5 mass% to 70 mass%, more preferably from 10 mass% to 65 mass%, particularly preferably from 20 mass% to 60 mass%. When the 1,2-vinyl bond content is 5 mass% or more, adhesiveness tends to be increased, and when the 1,2-vinyl bond content is 70 mass% or less, lithium ion conductivity and a cycle life characteristic tend to be easily improved. The 1,2-vinyl bond content is a value measured by ¹H-NMR.

The conjugated diene-based copolymer before hydrogenation preferably has a random copolymerization moiety of the structural unit derived from butadiene and the structural unit derived from the aromatic vinyl compound. The presence of such specific random copolymerization moiety is suitable because the dispersibility of an active material and a solid electrolyte can be made more satisfactory.

### <Modification Step>

The modification step is a step of allowing the active end of the conjugated diene-based copolymer obtained through the polymerization step described above to react with a compound for introducing a functional group that interacts with a current collector, a solid electrolyte, or the like into a polymerization termination end (hereinafter sometimes referred to as "compound (C2)"). Through this step, the functional group that interacts with a current collector, a solid electrolyte, or the like can be introduced into the polymerization termination end of the conjugated diene-based copolymer. As used herein, the term "active end" means a moiety other than a structure derived from a monomer having a carbon-carbon double bond (more specifically a carbon anion) present at the end of a molecular chain.

As long as the conjugated diene-based copolymer to be used for the modification reaction in this step (hereinafter sometimes referred to as "end modification reaction") has an active end, its polymerization initiation end may be unmodified or modified. The compound (C2) is not particularly limited as long as the compound is capable of reacting with the active end of the conjugated diene-based copolymer, but is preferably a compound that has one or more kinds of functional groups selected from the group consisting of: an amino group; a group having a carbon-nitrogen double bond; a nitrogen-containing heterocyclic group; a phosphino group; an epoxy group; a thioepoxy group; a protected hydroxy group; a protected thiol group; and a hydrocarbyloxysilyl group, and that is capable of reacting with a polymerization active end. Specifically, at least one kind selected from the group consisting of: a compound represented by the following general formula (5); and a compound represented by the following general formula (6) may be preferably used as the compound (C2).

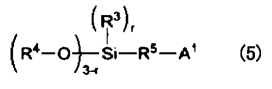

In the formula (5), A¹ represents a monovalent functional group having at least one kind of atom selected from the group consisting of: nitrogen; phosphorus; oxygen; sulfur; and silicon, and being bonded to R⁵ through the nitrogen atom, the phosphorus atom, the oxygen atom, the sulfur atom, the silicon atom, or a carbon atom contained in a carbonyl group, or represents a (thio)epoxy group. R³ and R⁴ each represent a hydrocarbyl group, R⁵ represents a hydrocarbylene group, and "r" represents an integer of from 0 to 2. When a plurality of R³s or R⁴s are present, the plurality of R³s or R⁴s may be identical to or different from each other.

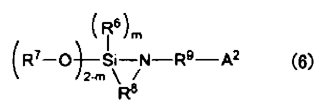

In the formula (6), A² represents a monovalent functional group having at least one kind of atom selected from the group consisting of: nitrogen; phosphorus; oxygen; sulfur; and silicon, having no active hydrogen, and being bonded to R⁹ through the nitrogen atom, the phosphorus atom, the oxygen atom, the sulfur atom, or the silicon atom. R⁶ and R⁷ each independently represent a hydrocarbyl group, R⁸ and R⁹ each independently represent a hydrocarbylene group, and "m" represents 0 or 1. When a plurality of R⁷s are present, the plurality of R⁷s may be identical to or different from each other.

In the formula (5) and the formula (6), the hydrocarbyl group of each of R³, R⁴, R⁶, and R⁷ is preferably a linear or branched alkyl group having 1 to 20 carbon atoms, a cycloalkyl group having 3 to 20 carbon atoms, or an aryl group having 6 to 20 carbon atoms. The hydrocarbylene group of each of R⁵, R⁸, and R⁹ is preferably a linear or branched alkanediyl group having 1 to 20 carbon atoms, a cycloalkylene group having 3 to 20 carbon atoms, or an arylene group having 6 to 20 carbon atoms. "r" and "m" each preferably represent 0 or 1 because reactivity with the active end can be increased.

When A¹ represents the above-mentioned monovalent functional group, it is preferred that the at least one kind of atom selected from the group consisting of: nitrogen; phosphorus; oxygen; sulfur; and silicon that A¹ has be not bonded to active hydrogen and be protected with a protecting group (e.g., a trisubstituted hydrocarbylsilyl group). In addition, it is preferred that the at least one kind of atom selected from the group consisting of: nitrogen; phosphorus; oxygen; sulfur; and silicon that A² has be not bonded to active hydrogen and be protected with a protecting group (e.g., a trisubstituted hydrocarbylsilyl group). As used herein, the term "active hydrogen" refers to a hydrogen atom bonded to an atom other than a carbon atom, and preferably refers to one having lower bond energy than a carbon-hydrogen bond of polymethylene. The "protecting group" is a functional group for converting A¹ or A² into a functional group inert to a polymerization active end. The term "(thio)epoxy group" is meant to encompass an epoxy group and a thioepoxy group.

A¹ may represent a group capable of forming an onium ion with an onium salt generator. When the compound (C2) has such group (A¹), excellent adhesiveness can be imparted to the conjugated diene-based copolymer. Specific examples of A¹ include: a nitrogen-containing group obtained by substituting two hydrogen atoms of a primary amino group with two protecting groups; a nitrogen-containing group obtained by substituting one hydrogen atom of a secondary amino group with one protecting group; a tertiary amino group; an imino group; a pyridyl group; a phosphorus-containing group obtained by substituting two hydrogen atoms of a primary phosphino group with two protecting groups; a phosphorus-containing group obtained by substituting one hydrogen atom of a secondary phosphino group with one protecting group; a tertiary phosphino group; an epoxy group; a group in which the hydrogen atom of a hydroxy group is protected with a protecting group; a thioepoxy group; a sulfur-containing group obtained by substituting the hydrogen atom of a thiol group with a protecting group; and a hydrocarbyloxycarbonyl group. Of those, a group having a nitrogen atom is preferred because of having satisfactory affinity for a solid electrolyte and an active material, and a tertiary amino group or a nitrogen-containing group obtained by substituting two hydrogen atoms of a primary amino group with two protecting groups is more preferred.

Preferred specific examples of the compound (C2) may include dibutyldichlorosilicon, methyltrichlorosilicon, dimethyldichlorosilicon, tetrachlorosilicon, triethoxymethylsilane, triphenoxymethylsilane, trimethoxysilane, methyltriethoxysilane, the compound represented by the general formula (5), and the compound represented by the general formula (6). Examples of the compound represented by the general formula (5) may include N,N-bis(trimethylsilyl)aminopropyltrimethoxysilane, N,N-bis(trimethylsilyl)aminopropylmethyldiethoxysilane, N-trimethylsilyl-N-methylaminopropylmethyldiethoxysilane, [3-(N,N-dimethylamino)propyl]trimethoxysilane, N,N',N'-tris(trimethylsilyl)-N-(2-aminoethyl)-3-aminopropyltriethoxysilane, 3-(4-trimethylsilyl-1-piperazino)propylmethyldimethoxysilane, 3-glycidoxypropylmethyldimethoxysilane, and 3-glycidoxypropyltriethoxysilane. In addition, examples of the compound represented by the general formula (6) may include 2,2-dimethoxy-1-(3-trimethoxysilylpropyl)-1,2-azasilolidine, 2,2-dimethoxy-1-(3-trimethoxysilylpropyl)-1-aza-2-silacyclopentane, 2,2-dimethoxy-1-phenyl-1,2-azasilolidine, 1-trimethylsilyl-2,2-dimethoxy-1-aza-2-silacyclopentane, and 2,2-dimethoxy-8-(4-methylpiperazinyl)methyl-1,6-dioxa-2-silacyclooctane. The compounds (C2) may be used alone or in combination thereof.

In addition, other than the compound (C2), for example, a germane compound or a stannane compound may also be suitably used in the modification step. When those compounds are used, a germanium atom or a tin atom can be introduced into the polymer (A). Herein, the compound group consisting of the compound (R), the compound (C2), the germane compound, and the stannane compound is sometimes referred to as "modifier".

Examples of the germane compound include: alkoxygermane compounds, such as a monoalkoxygermane compound, a dialkoxygermane compound, a trialkoxygermane compound, and a tetraalkoxygermane compound; and a halogenated triorganogermane compound, a dihalogenated diorganogermane compound, a trihalogenated organogermane compound, and a tetrahalogenated germane compound. The examples of the germane compound also include the same compounds as those given as the examples of the silane compound except that the compounds each have a germanium atom instead of the silicon atom.

Examples of the stannane compound include: alkoxystannane compounds, such as a monoalkoxystannane compound, a dialkoxystannane compound, a trialkoxystannane compound, and a tetraalkoxystannane compound; and a halogenated triorganostannane compound, a dihalogenated diorganostannane compound, a trihalogenated organostannane compound, and a tetrahalogenated stannane compound. The examples of the stannane compound also include the same compounds as those given as the examples of the silane compound except that the compounds each have a tin atom instead of the silicon atom.

Specific examples of those stannane compounds may include, as preferred examples, tetrachlorotin, tetrabromotin, trichlorobutyltin, trichloromethyltin, trichlorooctyltin, dibromodimethyltin, dichlorodimethyltin, dichlorodibutyltin, dichlorodioctyltin, 1,2-bis(trichlorostannyl)ethane, 1,2-bis(methyldichlorostannylethane), 1,4-bis(trichlorostannyl)butane, 1,4-bis(methyldichlorostannyl)butane, ethyltin tristearate, butyltin trisoctanoate, butyltin trisstearate, butyltin trislaurate, dibutyltin bisoctanoate, dibutyltin bisstearate, and dibutyltin bislaurate. Of those, tetrachlorotin (SnCl₄) is particularly preferably used.

The above-mentioned end modification reaction may be performed, for example, as a solution reaction. The solution reaction may be performed using a solution containing an unreacted monomer after the termination of the polymerization reaction in the polymerization step described above, or may be performed after the conjugated diene-based copolymer contained in the solution has been isolated and dissolved in an appropriate solvent such as cyclohexane. In addition, the end modification reaction may be performed using any of a batch system and a continuous system. In this case, a method of adding the compound (C2), the germane compound, or the stannane compound is not particularly limited, and examples thereof include a method involving adding the compound in one portion, a method involving adding the compound in divided portions, and a method involving continuously adding the compound.

The amount of the compound (C2), the germane compound, or the stannane compound to be used for the end modification reaction only needs to be appropriately set in accordance with the kind of the compound to be used for the reaction, but is preferably 0.1 molar equivalent or more, more preferably 0.3 molar equivalent or more with respect to the metal atom to be involved in the polymerization reaction that the polymerization initiator has. When the use amount is set to 0.1 molar equivalent or more, the modification reaction can be caused to proceed sufficiently, and hence the dispersion stability of a slurry can be suitably improved.

The temperature of the end modification reaction is generally the same as the temperature of the polymerization reaction, and is preferably from -20°C to 150°C, more preferably from 0°C to 120°C, particularly preferably from 20°C to 100°C. When the temperature of the modification reaction is low, the viscosity of the modified conjugated diene-based copolymer tends to be increased. Meanwhile, when the temperature of the modification reaction is high, the polymerization active end is liable to be deactivated. The reaction time of the modification reaction is preferably from 1 minute to 5 hours, more preferably from 2 minutes to 1 hour.

As described above, the polymer (A) preferably has a unit based on a modifier containing at least one kind of atom selected from the group consisting of: a nitrogen atom; an oxygen atom; a silicon atom; a germanium atom; and a tin atom.

### <Hydrogenation Reaction>

The polymer (A) may be a product obtained by hydrogenating the modified or unmodified conjugated diene-based copolymer obtained in the foregoing. Any method and conditions may be used as a method and conditions for the hydrogenation reaction as long as a conjugated diene-based copolymer having a desired hydrogenation ratio can be obtained. Examples of such hydrogenation method include: a method involving using, as a hydrogenation catalyst, a catalyst containing an organic metal compound of titanium as a main component; a method involving using a catalyst formed of an organic compound of iron, nickel, or cobalt and an organic metal compound such as an alkylaluminum; a method involving using an organic complex of an organic metal compound of ruthenium, rhodium, or the like; and a method involving using a catalyst obtained by supporting a metal, such as palladium, platinum, ruthenium, cobalt, or nickel, on a support, such as carbon, silica, or alumina. Of the various methods, a method involving performing hydrogenation under the mild conditions of a low pressure and a low temperature using an organic metal compound of titanium alone or a uniform catalyst formed of an organic metal compound of titanium and an organic metal compound of lithium, magnesium, or aluminum (JP 63-4841 B2, JP 01-37970 B2, JP 2000-37632 A) is industrially preferred, and also has high hydrogenation selectivity for the double bond of butadiene, thereby being suited for the purpose of the present invention.

The hydrogenation reaction of the modified conjugated diene-based copolymer is performed in a solvent which is inert to the catalyst and in which the conjugated diene-based copolymer is soluble. The solvent is preferably any one of aliphatic hydrocarbons, such as n-pentane, n-hexane, n-heptane, and n-octane, alicyclic hydrocarbons, such as cyclohexane and cycloheptane, aromatic hydrocarbons, such as benzene and toluene, and ethers, such as diethyl ether and tetrahydrofuran, or a mixture containing any one of the above-mentioned compounds as a main component.

The hydrogenation reaction is generally performed by keeping the conjugated diene-based copolymer under a hydrogen or inert atmosphere at a predetermined temperature, adding a hydrogenation catalyst under stirring or under no stirring, and then introducing a hydrogen gas for pressurization to a predetermined pressure. The "inert atmosphere" means an atmosphere that does not react with the participants of the hydrogenation reaction, and examples thereof include helium, neon, and argon. Air or oxygen causes deactivation of the catalyst by, for example, oxidizing the catalyst, and hence is not preferred. In addition, nitrogen acts as a catalyst poison at the time of the hydrogenation reaction to reduce hydrogenation activity, and hence is not preferred. In particular, the inside of a hydrogenation reactor is most suitably an atmosphere of a hydrogen gas alone.

Any of a batch process, a continuous process, and a combination thereof may be used as a hydrogenation reaction process for obtaining a hydrogenated conjugated diene-based copolymer. In addition, when a titanocene diaryl-based compound is used as the hydrogenation catalyst, the compound may be added alone as it is to a reaction solution, or may be added as a solution in an inert organic solvent. Any of various solvents that do not react with the participants of the hydrogenation reaction may be used as the inert organic solvent to be used in the case of using the catalyst as a solution. The same solvent as the solvent to be used for the hydrogenation reaction is preferred. In addition, the addition amount of the catalyst is from 0.02 mmol to 20 mmol per 100 g of the conjugated diene-based copolymer before hydrogenation.

In addition, the polymer (A) has a value α, which is represented by the following equation (i), of less than 0.9, where "p", "q", "r", and "s" represent constituent ratios (molar ratios) of a structural unit represented by the following formula (1), a structural unit represented by the following formula (2), a structural unit represented by the following formula (3), and a structural unit represented by the following formula (4) in the polymer, respectively. $α = \left(p+\left(0.5\times r\right)\right) / \left(p+q+\left(0.5\times r\right)+s\right)$

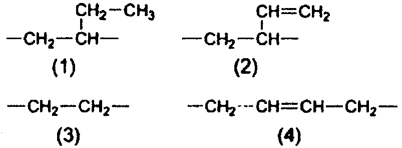

By virtue of setting α to less than 0.9, the dispersion stability of a slurry and the flexibility of an electrode are excellent, and besides, high lithium ion conductivity and a satisfactory cycle life characteristic can be achieved. For such reason, α is preferably less than 0.9, more preferably less than 0.8, particularly preferably less than 0.7. α represented by the equation (i) corresponds to the hydrogenation ratio of the conjugated diene-based copolymer. For example, when α is 0.6, the hydrogenation ratio of the conjugated diene-based copolymer is 60%. In addition, α may be 0. The hydrogenation ratio in the conjugated diene-based copolymer may be adjusted on the basis of, for example, the period of time of the hydrogenation reaction or the supply amount of hydrogen. The hydrogenation ratio may be measured by ¹H-NMR.

After the above-mentioned modification step or hydrogenation step, the anti-aging agent (B) may be added. The addition of the anti-aging agent (B) can prevent the gelation and deterioration of the polymer (A) due to heat, light, and oxidative deterioration in a solvent removal step by steam stripping and a drying step with a heat roll, which are performed after the synthesis of the polymer (A), and subsequent long-term storage as a bale.

Examples of the anti-aging agent include anti-aging agents described later in the "1.2. Anti-aging agent (B)" section.

The above-mentioned anti-aging agent (B) may be added in any one of a solid state, a molten state, or a solution state of being dissolved in a solvent capable of dissolving the anti-aging agent (B). The state of the polymer (A) at the time of the addition of the anti-aging agent (B) may be any of a solid state and a solution state, but is preferably a solution state from the viewpoint of the dispersibility of the anti-aging agent (B).

When the polymer (A) contains the anti-aging agent, the lower limit of the content ratio of the anti-aging agent is preferably 0.05 part by mass, more preferably 0.1 part by mass, particularly preferably 0.2 part by mass with respect to 100 parts by mass of the polymer (A). In addition, the upper limit of the content ratio of the anti-aging agent is preferably 2 parts by mass, more preferably 1.5 parts by mass, particularly preferably 1.2 parts by mass.

A suitable method for obtaining the polymer (A) is a method involving subjecting monomers including butadiene to solution polymerization in the presence of an alkali metal compound, and performing the modification step using the resultant polymer solution as it is. This method is industrially useful. In addition, the polymer (A) may be subjected to the hydrogenation step as required. In those cases, the polymer (A) is obtained by removing the solvent from the solution obtained in the foregoing and isolating the polymer (A). The isolation of the polymer (A) may be performed by, for example, a known solvent removal method such as steam stripping and a drying operation such as heat treatment.

In order to make the dispersion stability of a slurry and the adhesiveness of an electrode more satisfactory, the polymer (A) preferably has one or more kinds of functional groups selected from the group consisting of: an amino group; a nitrogen-containing heterocyclic group; a phosphino group; a hydroxy group; a thiol group; and a hydrocarbyloxysilyl group, and more preferably has one or more kinds of functional groups selected from the group consisting of: an amino group; a nitrogen-containing heterocyclic group; and a hydrocarbyloxysilyl group. Any such functional group is particularly preferably introduced into an end of the polymer (A).

### 1.1.2. Physical Properties of Polymer (A)

### <Bound Styrene Content>

The bound styrene content of the polymer (A) is from 5% to 40%, preferably from 8% to 30%, more preferably from 10% to 27%. When the bound styrene content of the polymer (A) falls within the above-mentioned ranges, the adhesiveness and flexibility of an electrode can both be achieved. The bound styrene content may be measured by ¹H-NMR measurement.

### <Weight Average Molecular Weight>

The weight average molecular weight (Mw) of the polymer (A) is preferably from 1.0×10⁵ to 2.0×10⁶, more preferably from 1.0×10⁵ to 1.5×10⁶, particularly preferably from 1.5×10⁵ to 1.0×10⁶. When the weight average molecular weight (Mw) is equal to or higher than the above-mentioned lower limit values, the adhesiveness of an electrode tends to be easily improved. When the weight average molecular weight (Mw) is equal to or lower than the above-mentioned upper limit values, the flexibility of an electrode tends to be kept. As used herein, the term "weight average molecular weight (Mw)" refers to a weight average molecular weight in terms of polystyrene measured by gel permeation chromatography (GPC).

### <Solubility>

The polymer (A) is preferably in a state of being dissolved in the liquid medium (C) to be described later. That "the polymer (A) dissolves in the liquid medium (C)" means that the solubility of the polymer (A) in the liquid medium (C) is 1 g or more with respect to 100 g of the liquid medium (C). When the polymer (A) is in a state of being dissolved in the liquid medium (C), the surface of an active material can be easily coated with the polymer (A) excellent in flexibility and adhesiveness, and hence the detachment of the active material due to its stretching and shrinking at the time of charge and discharge can be effectively suppressed to facilitate the provision of an all-solid-state secondary battery showing a satisfactory charge-discharge durability characteristic. In addition, the stability of the slurry becomes satisfactory, and the applicability of the slurry to a current collector also becomes satisfactory. For the above-mentioned reasons, the polymer (A) is preferably in a state of being dissolved in the liquid medium (C).

### 1.2. Anti-aging Agent (B)

The binder composition for an all-solid-state secondary battery according to this embodiment contains the anti-aging agent (B) at 200 ppm or more and 5,000 ppm or less with respect to the total mass of the binder composition. The incorporation of the anti-aging agent (B) within the above-mentioned concentration range can suppress the deterioration of the polymer (A) in the binder composition.

In this connection, when used as a binder for an all-solid-state secondary battery, the polymer (A) is generally prepared into a solution, but the concentration of an anti-aging agent contained in the polymer (A) is diluted through consumption by heating in a solution preparation step and through the solution preparation, and hence concentration control of the anti-aging agent needs to be performed again. When the concentration control is not performed, there is a risk in that a microgel may be produced during storage of the solution of the polymer (A) to form a protrusion or a crater on a coating film of a slurry using the polymer (A). In addition, when the anti-aging agent at or above the above-mentioned lower limit concentration is not incorporated, the stability of the slurry is also poor, and the polymer (A) is deteriorated at the time of the drying of an electrode plate or at the time of the charge and discharge of the battery to degrade battery characteristics. In particular, the binder of each of a negative electrode and a solid electrolyte layer needs to follow the volume change (expansion and contraction) of a negative electrode active material along with charge and discharge, and when its followability is poor, a conduction path for lithium ions cannot be maintained, resulting in a reduction in lithium ion conductivity and an increase in resistance.

Meanwhile, when the anti-aging agent within the above-mentioned concentration range is added, the deterioration of the polymer (A) is suppressed, and hence the storage stability of each of the polymer solution and the slurry is improved, and moreover, electrical storage device characteristics are also improved. In addition, when the anti-aging agent within the above-mentioned concentration range is added, the polymer (A) and the anti-aging agent (B) interact with each other, and hence the bleeding out of the anti-aging agent (B) after the application of the slurry can also be suppressed. As a result, a degradation in battery performance through the reaction of the anti-aging agent (B) with the solid electrolyte can be suppressed.

Examples of the anti-aging agent (B) include a phenol-based anti-aging agent, an amine-based anti-aging agent, a quinone-based anti-aging agent, an organophosphorus-based anti-aging agent, a sulfur-based anti-aging agent, and a phenothiazine-based anti-aging agent. Of those, at least one kind selected from the group consisting of: a phenol-based anti-aging agent; and an amine-based anti-aging agent is contained.

Examples of the phenol-based anti-aging agent include p-methoxyphenol, 2,6-di-tert-butyl-p-cresol, phenol, hydroquinone, p-cresol, butylated hydroxyanisole, propyl gallate, chlorogenic acid, catechin, caffeic acid, genkwanin, luteolin, tocopherol, catechol, resorcinol, 1,4-dihydroxynaphthalene, 1,5-dihydroxynaphthalene, pyrogallol, 4,4'-butylidenebis(6-tert-butyl-m-cresol), 2,2'-methylenebis(4-methyl-6-tert-butylphenol), 2,2'-methylenebis(6-tert-butyl-4-ethylphenol), 4,4'-thiobis(6-tert-butyl-m-cresol), 2,5-di-tert-amylhydroquinone, styrenated phenol, 2,5-di-tert-butylhydroquinone, 2-methyl-4,6-bis[(n-octylthio)methyl]phenol, 2,4-bis(dodecylthiomethyl)-6-methylphenol, 2-tert-butyl-6-(3-tert-butyl-2-hydroxy-5-methylbenzyl)-4-methylphenyl acrylate, and 2-[1-(2-hydroxy-3,5-di-tert-pentylphenyl)ethyl]-4,6-di-tert-pentylphenyl acrylate.

Examples of the amine-based anti-aging agent include aromatic amines, such as 1-naphthylamine, 2-naphthylamine, phenylenediamine, 4,4'-diaminobenzophenone, 4,4'-bis(dimethylamino)benzophenone, N-isopropyl-N'-phenylbenzene-1,4-diamine, N-(1,3-dimethylbutyl)-N'-phenyl-1,4-phenylenediamine, a 2,2,4-trimethyl-1,2-dihydroquinoline polymer, and 6-ethoxy-2,2,4-trimethyl-1,2-dihydroquinoline. In addition, an amine-based anti-aging agent, such as a light stabilizer (HALS), a hindered amine compound, or a nitroxyl radical (2,2,6,6-tetramethylpiperidin-1-oxyl (TEMPO)), may also be preferably used.

An example of the phosphorus-based anti-aging agent is a phosphite compound. Examples of the sulfur-based anti-aging agent include a thiol compound and a sulfide compound such as pentaerythrityltetrakis(3-laurylthiopropionate).

The lower limit value of the concentration of the anti-aging agent (B) is 200 ppm, preferably 300 ppm, more preferably 400 ppm with respect to the total mass of the binder composition for an all-solid-state secondary battery. The upper limit value of the concentration of the anti-aging agent (B) is 5,000 ppm, preferably 4,500 ppm, more preferably 4,200 ppm with respect to the total mass of the binder composition for an all-solid-state secondary battery. Meanwhile, when the anti-aging agent (B) within the above-mentioned concentration range is added, the deterioration of the polymer (A) is suppressed, and hence the storage stability of each of the polymer solution and the slurry is improved, and moreover, electrical storage device characteristics are also improved. In addition, the polymer (A) and the anti-aging agent (B) interact with each other, and hence the bleeding out of the anti-aging agent (B) after the application of the slurry can also be suppressed. As a result, a degradation in battery performance through the reaction of the anti-aging agent (B) with the solid electrolyte can be suppressed.

The lower limit value of the content ratio of the anti-aging agent (B) is preferably 2,000 ppm, more preferably 3,000 ppm, particularly preferably 4,000 ppm with respect to 100 parts by mass of the polymer (A). The upper limit value of the content ratio of the anti-aging agent (B) is preferably 50,000 ppm, more preferably 45,000 ppm, particularly preferably 42,000 ppm with respect to 100 parts by mass of the polymer (A). When the content ratio of the anti-aging agent (B) is set to fall within the above-mentioned ranges, the deterioration of the polymer (A) is suppressed, and hence the storage stability of each of the polymer solution and the slurry is improved, and moreover, the electrical storage device characteristics are also improved. In addition, the polymer (A) and the anti-aging agent (B) interact with each other, and hence the bleeding out of the anti-aging agent (B) after the application of the slurry can also be reduced. As a result, a degradation in battery performance through the reaction of the anti-aging agent (B) with the solid electrolyte can be reduced.

### 1.3. Liquid Medium (C)

The liquid medium (C) is not particularly limited, and there may be used, for example: aliphatic hydrocarbons, such as hexane, heptane, octane, decane, and dodecane; alicyclic hydrocarbons, such as cyclohexane, cycloheptane, cyclooctane, and cyclodecane; aromatic hydrocarbons, such as toluene, xylene, mesitylene, naphthalene, and tetralin; ketones, such as 3-pentanone, 4-heptanone, methyl hexyl ketone, and diisobutyl ketone; esters, such as butyl acetate, butyl butyrate, methyl butanoate, butyl pentanoate, butyl hexanoate, pentyl butyrate, pentyl pentanoate, pentyl hexanoate, hexyl butyrate, hexyl pentanoate, and hexyl hexanoate; and ethers, such as dibutyl ether, tetrahydrofuran, and anisole. Those solvents may be used alone or in combination thereof.

The content of the liquid medium (C) is preferably from 100 parts by mass to 10,000 parts by mass, more preferably from 150 parts by mass to 5,000 parts by mass, still more preferably from 200 parts by mass to 4,000 parts by mass, particularly preferably from 300 parts by mass to 3,000 parts by mass with respect to 100 parts by mass of the polymer (A). When the content of the liquid medium (C) is set to fall within the above-mentioned ranges, workability in the use of the binder composition for an all-solid-state secondary battery and a slurry for an all-solid-state secondary battery to be obtained therefrom can be improved.

### 1.4. Other Additives

The binder composition for an all-solid-state secondary battery according to this embodiment may contain additives such as a thickener as required.

### <Thickener>

When the binder composition contains the thickener, the applicability of the slurry and the charge-discharge characteristic of the all-solid-state secondary battery to be obtained can be further improved in some cases.

Examples of the thickener include: cellulose-based polymers, such as carboxymethyl cellulose, methyl cellulose, ethyl cellulose, and hydroxypropyl cellulose; poly(meth)acrylic acid; an ammonium salt or alkali metal salt of the cellulose compound or the poly(meth)acrylic acid; modified polyvinyl alcohol and polyethylene oxide; and polyvinylpyrrolidone, polycarboxylic acid, starch oxide, starch phosphate, casein, various modified starches, chitin, and a chitosan derivative. Of those, a cellulose-based polymer is preferred.

When the binder composition for an all-solid-state secondary battery according to this embodiment contains the thickener, the content ratio of the thickener is preferably 5 parts by mass or less, more preferably from 0.1 part by mass to 3 parts by mass with respect to 100 parts by mass of the total solid content of the binder composition for an all-solid-state secondary battery.

### 1.5. Method of preparing Binder Composition for All-solid-state Secondary Battery

The binder composition for an all-solid-state secondary battery according to this embodiment may be prepared through a step including adding the anti-aging agent (B) and the liquid medium (C) to the polymer (A), further adding other additives as required, and appropriately performing stirring to dissolve the polymer (A) and the anti-aging agent (B) in the liquid medium (C).

The binder composition for an all-solid-state secondary battery according to this embodiment can form a binder having high adhesiveness not only to the current collector of an electrode, but also to a solid electrolyte material, and hence can have its use amount reduced to improve the conductivity of a solid electrolyte layer, thus being suitably usable for an all-solid-state type battery.

The method of preparing the binder composition for an all-solid-state secondary battery according to this embodiment may include a step of removing a particulate metal component in the binder composition (hereinafter sometimes referred to as "particulate metal removal step"). In the particulate metal removal step, the "particulate metal component" refers to a metal component present in a particulate form in the binder composition, and does not include a metal component dissolved and present in a metal ion state.

In the particulate metal removal step, a method for the removal of the particulate metal component from the binder composition for an all-solid-state secondary battery is not particularly limited, and examples thereof include: a method for removal based on filtration using a filter; a method for removal based on a vibration sieve; a method for removal based on centrifugation; and a method for removal based on a magnetic force. Of those, a method for removal based on a magnetic force is preferred because the object to be removed is the metal component.

The method for removal based on a magnetic force is not particularly limited as long as the method can remove the metal component. However, in consideration of productivity and removal efficiency, a method for removal involving arranging a magnetic filter in the production line of the binder composition for an all-solid-state secondary battery and passing the polymer solution therethrough is preferred.

The step of removing the particulate metal component from the polymer solution through a magnetic filter is preferably performed by passage through a magnetic filter forming a magnetic field having a magnetic flux density of 100 gauss or more. When the magnetic flux density is low, the removal efficiency of the metal component is reduced. For this reason, the magnetic flux density is preferably 1,000 gauss or more, and in consideration of the removal of stainless steel having weak magnetism, is more preferably 2,000 gauss or more, most preferably 5,000 gauss or more.

When the magnetic filter is arranged in the production line, it is preferred that a step of removing coarse foreign matter or metal particles through a filter such as a cartridge filter be included on the upstream side of the magnetic filter. This is because the coarse metal particles may pass through the magnetic filter depending on a flow rate at which the filtration is performed.

In addition, the magnetic filter has an effect even when the filtration is performed only once, but is more preferably of a circulation type. This is because, when the circulation type is adopted, the removal efficiency of metal particles is improved.

When the magnetic filter is arranged in the production line of the binder composition for an all-solid-state secondary battery, the site at which the magnetic filter is arranged is not particularly limited, but the magnetic filter is preferably arranged immediately before the binder composition for an all-solid-state secondary battery is filled into a container, or when a filtration step with a filtration filter is present before the filling into a container, is preferably arranged before the filtration filter. This is to prevent the mixing of the metal component into a product in the case where the metal component is desorbed from the magnetic filter.

Specific examples of the particulate metal component include metals, such as Fe, Ni, and Cr, or metal compounds thereof. The above-mentioned particulate metal component sometimes remains in the binder composition for an all-solid-state secondary battery according to this embodiment, and the particulate metal component is preferably removed through the particulate metal removal step so that the content of a particulate metal component having a particle diameter of 20 µm or more may become 10 ppm or less. The content of the particulate metal component having a particle diameter of 20 µm or more may be measured as follows: the resultant binder composition for an all-solid-state secondary battery is further filtered through a mesh having an aperture corresponding to 20 µm; the element of metal particles remaining on the mesh is subjected to elemental analysis using an X-ray microanalyzer (EPMA); the metal particles are dissolved with an acid capable of dissolving the metal; and the resultant is subjected to measurement using Inductively Coupled Plasma (ICP).

### 2. Slurry for All-solid-state Secondary Battery

A slurry for an all-solid-state secondary battery according to one embodiment of the present invention contains: the above-mentioned binder composition for an all-solid-state secondary battery; and a solid electrolyte. The slurry for an all-solid-state secondary battery according to this embodiment may be used as a material for forming any one active material layer out of a positive electrode active material layer and a negative electrode active material layer, and may also be used as a material for forming a solid electrolyte layer.

The slurry for an all-solid-state secondary battery, for forming a positive electrode active material layer, contains the above-mentioned binder composition for an all-solid-state secondary battery, a solid electrolyte, and an active material for a positive electrode (hereinafter sometimes referred to simply as "positive electrode active material"). In addition, the slurry for an all-solid-state secondary battery, for forming a negative electrode active material layer, contains the above-mentioned binder composition for an all-solid-state secondary battery, a solid electrolyte, and an active material for a negative electrode (hereinafter sometimes referred to simply as "negative electrode active material"). Further, the slurry for an all-solid-state secondary battery, for forming a solid electrolyte layer, contains the above-mentioned binder composition for an all-solid-state secondary battery, and a solid electrolyte. The components that may be contained in the slurry for an all-solid-state secondary battery according to this embodiment are described below.

### 2.1. Active Materials

### <Positive Electrode Active Material>

As the positive electrode active material, there may be used, for example: inorganic compounds, such as MnO₂, MoO₃, V₂O₅, V₆O₁₃, Fe₂O₃, Fe₃O₄, Li₍₁₋ₓ₎CoO₂, Li₍₁₋ₓ₎NiO₂, LiₓCo_{y}Sn_{z}O₂, Li₍₁₋ₓ₎Co_{(1-y)}Ni_{y}O₂, Li₍₁₊ₓ₎Ni_{1/3}Co_{1/3}Mn_{1/3}O₂, TiS₂, TiS₃, MoS₃, FeS₂, CuF₂, and NiF₂; carbon materials, such as a fluorocarbon, graphite, a vapor-grown carbon fiber and/or a pulverized product thereof, a PAN-based carbon fiber and/or a pulverized product thereof, and a pitch-based carbon fiber and/or a pulverized product thereof; and conductive polymers, such as polyacetylene and poly-p-phenylene. Those positive electrode active materials may be used alone or in combination thereof.

The average particle diameter of the positive electrode active material is not particularly limited, but is preferably from 0.1 µm to 50 µm because a contact area at a solid-solid interface can be increased. In order to allow the positive electrode active material to have a predetermined average particle diameter, it is appropriate to use a pulverizer, such as a mortar, a ball mill, a sand mill, a vibrating ball mill, a satellite ball mill, or a swirling airflow type jet mill, or a classifier, such as a sieve or an air classifier. At the time of pulverization, wet type pulverization in which a solvent, such as water or methanol, is caused to coexist may be performed as required. Both a dry type and a wet type may be used for classification. In addition, a positive electrode active material obtained by a firing method may be used after being washed with water, an acidic aqueous solution, an alkaline aqueous solution, or an organic solvent.

The average particle diameter of the active material refers to a volume average particle diameter measured using a particle size distribution-measuring apparatus employing a laser diffraction method as its measurement principle. Examples of such laser diffraction particle size distribution-measuring apparatus include the HORIBA LA-300 series and the HORIBA LA-920 series (which are manufactured by Horiba, Ltd.).

In the slurry for an all-solid-state secondary battery, for forming a positive electrode active material layer, the content ratio of the positive electrode active material is preferably from 20 parts by mass to 90 parts by mass, more preferably from 40 parts by mass to 80 parts by mass with respect to 100 parts by mass of the total of solid components.

### <Negative Electrode Active Material>

The negative electrode active material is not particularly limited as long as the negative electrode active material can reversibly store and release lithium ions or the like, but examples thereof include a carbonaceous material, a metal oxide, such as tin oxide or silicon oxide, elemental lithium, a lithium alloy such as a lithium-aluminum alloy, and a metal capable of forming an alloy with lithium, such as Sn, Si, or In. Of those, a carbonaceous material is preferably used from the viewpoint of reliability, and a silicon-containing material is preferably used from the viewpoint that a battery capacity can be increased.

The carbonaceous material is not particularly limited as long as the material is substantially formed of carbon, but examples thereof include petroleum pitch, natural graphite, artificial graphite such as vapor-grown graphite, and carbonaceous materials obtained by firing various synthetic resins, such as a PAN-based resin and a furfuryl alcohol resin. The examples further include various carbon fibers, such as a PAN-based carbon fiber, a cellulose-based carbon fiber, a pitch-based carbon fiber, a vapor-grown carbon fiber, a dehydrated PVA-based carbon fiber, a lignin carbon fiber, a glassy carbon fiber, and an activated carbon fiber, mesophase microspheres, graphite whiskers, and flat plate-shaped graphite.

The silicon-containing material can store more lithium ions than graphite or acetylene black to be generally used. That is, the silicon-containing material provides an increased lithium ion storage capacity per unit weight, and hence can increase the battery capacity. As a result, the silicon-containing material has an advantage of being capable of lengthening a battery driving time, and hence is expected to be used for, for example, an on-vehicle battery in the future. Meanwhile, the silicon-containing material is known to undergo a large volume change along with the storage and release of lithium ions. Whereas graphite and acetylene black each undergo a volume expansion of from about 1.2 times to about 1.5 times through the storage of lithium ion, a negative electrode active material containing silicon may undergo a volume expansion as high as about 3 times. When such expansion and contraction (charge and discharge) are repeated, a lack of durability of the negative electrode active material layer occurs, with the result that, for example, a lack of contact is liable to occur or a cycle life (battery life) is shortened in some cases. The negative electrode active material layer formed using the slurry for an all-solid-state secondary battery according to this embodiment exhibits high durability (strength) by virtue of the binder component following even the repetition of such expansion and contraction, and hence exhibits an excellent effect of being capable of achieving a satisfactory cycle life characteristic even under a high voltage.

The average particle diameter of the negative electrode active material is not particularly limited, but is preferably from 0.1 µm to 60 µm because a contact area at a solid-solid interface can be increased. In order to allow the negative electrode active material to have a predetermined average particle diameter, the pulverizer or classifier exemplified above may be used.

In the slurry for an all-solid-state secondary battery, for forming a negative electrode active material layer, the content ratio of the negative electrode active material is preferably from 20 parts by mass to 90 parts by mass, more preferably from 40 parts by mass to 80 parts by mass with respect to 100 parts by mass of the total of the solid components.

### 2.2. Solid Electrolyte

The slurry for an all-solid-state secondary battery according to this embodiment contains a solid electrolyte. A solid electrolyte to be generally used for an all-solid-state secondary battery may be appropriately selected and used as the solid electrolyte, but the solid electrolyte is preferably a sulfide-based solid electrolyte or an oxide-based solid electrolyte.

The lower limit of the average particle diameter of the solid electrolyte is preferably 0.01 µm, more preferably 0.1 µm. The upper limit of the average particle diameter of the solid electrolyte is preferably 100 µm, more preferably 50 µm.

In the slurry for an all-solid-state secondary battery according to this embodiment, the lower limit of the content ratio of the solid electrolyte is preferably 50 parts by mass, more preferably 70 parts by mass, particularly preferably 90 parts by mass with respect to 100 parts by mass of the total of the solid components because battery performance and a reducing/maintaining effect on interfacial resistance can both be achieved. The upper limit of the content ratio of the solid electrolyte is preferably 99.9 parts by mass, more preferably 99.5 parts by mass, particularly preferably 99.0 parts by mass with respect to 100 parts by mass of the total of the solid components because of a similar effect. However, when the solid electrolyte is used together with the positive electrode active material or the negative electrode active material, their total preferably falls within the above-mentioned concentration ranges.

### <Sulfide-based Solid Electrolyte>

It is preferred that the sulfide-based solid electrolyte contain a sulfur atom (S) and a metal element of Group 1 or Group 2 of the periodic table, have ion conductivity, and have an electron insulating property. An example of such sulfide-based solid electrolyte is a sulfide-based solid electrolyte having a compositional formula represented by the following general formula (7).

LiₐM_{b}P_{c}S_{d} ····· (7)

In the formula (7), M represents an element selected from B, Zn, Si, Cu, Ga, and Ge. "a" to "d" represent the composition ratios of the respective elements, and satisfy a:b:c:d=1 to 12:0 to 1:1:2 to 9.

In the general formula (7), the composition ratios of Li, M, P, and S satisfy preferably b=0, more preferably b=0 and a:c:d=1 to 9:1:3 to 7, still more preferably b=0 and a:c:d=1.5 to 4:1:3.25 to 4.5. As described later, the composition ratio of each element may be controlled by adjusting the blending amount of a raw material compound in the production of the sulfide-based solid electrolyte.

The sulfide-based solid electrolyte may be amorphous (glass), may be a crystal (glass ceramics), or may be only partially crystallized.

A ratio between Li₂S and P₂S₅ in each of Li-P-S-based glass and Li-P-S-based glass ceramics is preferably from 65:35 to 85:15, more preferably from 68:32 to 80:20 in terms of molar ratio of Li₂S:P₂S₅. When the ratio between Li₂S and P₂S₅ is set to fall within the ranges, lithium ion conductivity can be increased. The lithium ion conductivity of the sulfide-based solid electrolyte is preferably 1×10⁻⁴ S/cm or more, more preferably 1×10⁻³ S/cm or more.

An example of such compound is one obtained using a raw material composition containing Li₂S and a sulfide of an element of any one of Group 13 to Group 15. Specific examples thereof include Li₂S-P₂S₅, Li₂S-GeS₂, Li₂S-GeS₂-ZnS, Li₂S-Ga₂S₃, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, Li₂S-SiS₂-LiI, Li₂S-SiS₂-Li₄SiO₄, Li₂S-SiS₂-Li₃PO₄, and Li₁₀GeP₂S₁₂. Of those, a crystalline and/or amorphous raw material composition formed of Li₂S-P₂S₅, Li₂S-GeS₂-Ga₂S₃, Li₂S-GeS₂-P₂S₅, Li₂S-SiS₂-P₂S₅, Li₂S-SiS₂-Li₄SiO₄, or Li₂S-SiS₂-Li₃PO₄ is preferred because the composition has high lithium ion conductivity.

As a method of synthesizing the sulfide-based solid electrolyte through use of such raw material composition, there is given, for example, an amorphization method. Examples of the amorphization method include a mechanical milling method and a melt quenching method. Of those, a mechanical milling method is preferred because the method enables treatment at ordinary temperature, thereby being able to simplify a production process.

The sulfide-based solid electrolyte may be synthesized with reference to the literatures, such as T. Ohtomo, A. Hayashi, M. Tatsumisago, Y. Tsuchida, S. Hama, K. Kawamoto, Journal of Power Sources, 233, (2013), pp 231-235, and A. Hayashi, S. Hama, H. Morimoto, M. Tatsumisago, T. Minami, Chem. Lett., (2001), pp 872-873.

### <Oxide-based Solid Electrolyte>

It is preferred that the oxide-based solid electrolyte contain an oxygen atom (O) and a metal element of Group 1 or Group 2 of the periodic table, have ion conductivity, and have an electron insulating property. Examples of such oxide-based solid electrolyte include LiₓₐLa_{ya}TiO₃ [xa=0.3 to 0.7, ya=0.3 to 0.7] (LLT), Li₇La₃Zr₂O₁₂ (LLZ), Li_{3.5}Zn_{0.25}GeO₄ having a lithium super ionic conductor (LISICON)-type crystal structure, LiTi₂P₃O₁₂ having a natrium super ionic conductor (NASICON)-type crystal structure, Li_{(1+xb+yb)}(Al,Ga)_{xb}(Ti,Ge)_{(2-xb)}Si_{yb}P_{(3-yb)}O₁₂ (where 0≤xb≤1 and 0≤yb≤1), and Li₇La₃Zr₂O₁₂ having a garnet-type crystal structure.

In addition, a phosphorus compound containing Li, P, and O is also preferred as the oxide-based solid electrolyte. Examples thereof include lithium phosphate (Li₃PO₄), LiPON obtained by substituting part of the oxygen atoms of lithium phosphate with a nitrogen atom, and LiPOD (D represents at least one kind selected from Ti, V, Cr, Mn, Fe, Co, Ni, Cu, Zr, Nb, Mo, Ru, Ag, Ta, W, Pt, and Au). In addition, for example, LiAON (A represents at least one kind selected from Si, B, Ge, Al, C, and Ga) may also be preferably used.

Of those, Li_{(1+xb+yb)}(Al,Ga)_{xb}(Ti,Ge)_{(2-xb)}Si_{yb}P_{(3-yb)}O₁₂ (where 0≤xb≤1 and 0≤yb≤1) is preferred because of having high lithium ion conductivity and being chemically stable and easy to handle. Those oxide-based solid electrolytes may be used alone or in combination thereof.

The lithium ion conductivity of the oxide-based solid electrolyte is preferably 1×10⁻⁶ S/cm or more, more preferably 1×10⁻⁵ S/cm or more, particularly preferably 5×10⁻⁵ S/cm or more.

### 2.3. Other Additives

The slurry for an all-solid-state secondary battery according to this embodiment may contain, besides the above-mentioned components, other additives as required. Examples of the other additives include a conductivity-imparting agent, a thickener, and a liquid medium (excluding the liquid medium included in the binder composition for an all-solid-state secondary battery).

### <Conductivity-imparting Agent>

The conductivity-imparting agent has an effect of assisting the conductivity of electrons, and hence is added to the slurry for an all-solid-state secondary battery for forming a positive electrode active material layer or a negative electrode active material layer. Specific examples of the conductivity-imparting agent include carbons, such as activated carbon, acetylene black, ketjen black, furnace black, graphite, a carbon fiber, and a fullerene. Of those, acetylene black or furnace black is preferred. When the slurry for an all-solid-state secondary battery according to this embodiment contains the conductivity-imparting agent, the content ratio of the conductivity-imparting agent is preferably 20 parts by mass or less, more preferably from 1 part by mass to 15 parts by mass, particularly preferably from 2 parts by mass to 10 parts by mass with respect to 100 parts by mass of the active material.

### <Thickener>

Specific examples of the thickener include the thickeners given as examples in the foregoing <Thickener> section in "1.4. Other Additives". When the slurry for an all-solid-state secondary battery according to this embodiment contains the thickener, the content ratio of the thickener is preferably 5 parts by mass or less, more preferably from 0.1 part by mass to 3 parts by mass with respect to 100 parts by mass of the total solid content of the slurry for an all-solid-state secondary battery.

### <Liquid Medium>

Specific examples of the liquid medium include the same liquid media as the liquid media (C) given as examples in the foregoing "1.3. Liquid Medium (C)" section. When the liquid medium is added to the slurry for an all-solid-state secondary battery according to this embodiment, the same liquid medium as the liquid medium (C) contained in the binder composition for an all-solid-state secondary battery may be added, or a different liquid medium may be added, but the same liquid medium is preferably added. The content ratio of the liquid medium in the slurry for an all-solid-state secondary battery according to this embodiment may be adjusted to any ratio in order to make its applicability satisfactory to suppress the concentration gradients of the polymer (A) and the active material in drying treatment after application.

### 2.4. Method of preparing Slurry for All-solid-state Secondary Battery

The slurry for an all-solid-state secondary battery according to this embodiment may be produced by any method as long as the slurry contains the above-mentioned binder composition for an all-solid-state secondary battery and the solid electrolyte.

However, in order to more efficiently and inexpensively produce a slurry having more satisfactory dispersibility and stability, the slurry is preferably produced by adding the solid electrolyte and the optionally added components to be used as required to the above-mentioned binder composition for an all-solid-state secondary battery, followed by their mixing. The mixing of the binder composition for an all-solid-state secondary battery and the other components may be performed by stirring by a known technique.

With regard to mixing/stirring means for producing the slurry for an all-solid-state secondary battery, there is a need to select: a mixing machine capable of performing stirring to such a degree that aggregates of solid electrolyte particles do not remain in the slurry; and necessary and sufficient dispersion conditions. The degree of dispersion may be measured with a grind gauge, and the mixing/dispersion is preferably performed so that no aggregate product larger than at least 100 µm remains. Examples of the mixing machine that meets such condition may include a ball mill, a bead mill, a sand mill, a defoaming machine, a pigment disperser, a mortar machine, an ultrasonic disperser, a homogenizer, a planetary mixer, and a Hobart mixer.

At least part of the process of the preparation of the slurry for an all-solid-state secondary battery (mixing operation for its components) is preferably performed under reduced pressure. With this configuration, air bubbles can be prevented from occurring in the positive electrode active material layer, negative electrode active material layer, or solid electrolyte layer to be obtained. The degree of pressure reduction is preferably set to from about 5.0×10³ Pa to about 5.0×10⁵ Pa in terms of absolute pressure.

### 3. Solid Electrolyte Sheet

A solid electrolyte sheet according to one embodiment of the present invention includes a substrate and a layer formed thereon by applying and drying the above-mentioned slurry for an all-solid-state secondary battery.

The solid electrolyte sheet according to this embodiment may be produced by, for example, applying the above-mentioned slurry for an all-solid-state secondary battery onto a film serving as a base material by a blade method (e.g., a doctor blade method), a calender method, a spin coating method, a dip coating method, an ink jet method, an offset method, a die coating method, a spray method, or the like, drying the slurry to form a layer, and then peeling the film. As such film, there may be used, for example, a general one such as a PET film subjected to release treatment.

Alternatively, the solid electrolyte sheet may be formed by directly applying the slurry for an all-solid-state secondary battery containing the solid electrolyte to the surface of a green sheet on which the solid electrolyte sheet is laminated, or of another constituent member of an all-solid-state secondary battery, and drying the slurry.

For the solid electrolyte sheet according to this embodiment, the above-mentioned slurry for an all-solid-state secondary battery is preferably applied so that the thickness of the layer may fall within the range of preferably from 1 µm to 500 µm, more preferably from 1 µm to 100 µm. When the thickness of the layer falls within the above-mentioned ranges, conduction ions such as lithium ions can easily move, and hence the output of the battery is increased. In addition, when the thickness of the layer falls within the above-mentioned ranges, the battery as a whole can be thinned, and hence its capacity per unit volume can be increased.

The drying of the slurry for an all-solid-state secondary battery is not particularly limited, and any means, such as drying by heating, drying under reduced pressure, or drying by heating under reduced pressure, may be used. A drying atmosphere is not particularly limited, and the drying may be performed, for example, under an air atmosphere.

When the solid electrolyte sheet contains a positive electrode active material and a solid electrolyte, the solid electrolyte sheet has a function as a positive electrode active material layer. When the solid electrolyte sheet contains a negative electrode active material and a solid electrolyte, the solid electrolyte sheet has a function as a negative electrode active material layer. In addition, when the solid electrolyte sheet contains no positive electrode active material and no negative electrode active material, and contains a solid electrolyte, the solid electrolyte sheet has a function as a solid electrolyte layer.

### 4. Electrode for All-solid-state Secondary Battery and All-solid-state Secondary Battery

An electrode for an all-solid-state secondary battery according to one embodiment of the present invention includes: a current collector; and an active material layer formed on a surface of the current collector by applying and drying the above-mentioned slurry for an all-solid-state secondary battery. Such electrode for an all-solid-state secondary battery may be produced by applying the above-mentioned slurry for an all-solid-state secondary battery to the surface of the current collector such as metal foil to form a coating film, and then drying the coating film to form the active material layer. The thus produced electrode for an all-solid-state secondary battery is such that the active material layer containing the above-mentioned polymer (A), anti-aging agent (B), solid electrolyte, and active material, and further, optional components added as required is bound onto the current collector, and hence the electrode for an all-solid-state secondary battery is excellent in flexibility, abrasion resistance, and powder fall-off resistance, and also shows a satisfactory charge-discharge durability characteristic.

An electron conductor that does not cause a chemical change is preferably used as the current collector of a positive electrode or a negative electrode. As the current collector of a positive electrode, aluminum, stainless steel, nickel, titanium, alloys thereof, and the like, and a product obtained by subjecting a surface of aluminum or stainless steel to treatment with carbon, nickel, titanium, or silver are preferred. Of those, aluminum and an aluminum alloy are more preferred. As the current collector of a negative electrode, aluminum, copper, stainless steel, nickel, titanium, and alloys thereof are preferred. Of those, aluminum, copper, and a copper alloy are more preferred.

With regard to the shape of the current collector, a current collector having a film sheet shape is generally used, but for example, a net, a punched product, a lath body, a porous body, a foam body, or a molded body of a fiber group may also be used. The thickness of the current collector is not particularly limited, but is preferably from 1 µm to 500 µm. In addition, it is also preferred that unevenness be formed on the surface of the current collector through surface treatment.

A doctor blade method, a reverse roll method, a comma bar method, a gravure method, an air knife method, or the like may be utilized as means for applying the slurry for an all-solid-state secondary battery onto the current collector. As conditions for the drying treatment of the applied film of the slurry for an all-solid-state secondary battery, a treatment temperature is preferably from 20°C to 250°C, more preferably from 50°C to 150°C, and a treatment time is preferably from 1 minute to 120 minutes, more preferably from 5 minutes to 60 minutes.

In addition, the active material layer formed on the current collector may be subjected to press processing and compressed. A high-pressure super press, a soft calender, a 1-ton press machine, or the like may be utilized as means for performing the press processing. Conditions for the press processing may be appropriately set in accordance with the processing machine to be used.

The active material layer formed on the current collector as described above has, for example, a thickness of from 40 µm to 100 µm and a density of from 1.3 g/cm³ to 2.0 g/cm³.

The thus produced electrode for an all-solid-state secondary battery is suitably used as an electrode in an all-solid-state secondary battery having a configuration in which a solid electrolyte layer is sandwiched between a pair of electrodes, specifically as a positive electrode and/or negative electrode for an all-solid-state secondary battery. In addition, a solid electrolyte layer formed using the above-mentioned slurry for an all-solid-state secondary battery is suitably used as a solid electrolyte layer for an all-solid-state secondary battery.

An all-solid-state secondary battery according to this embodiment may be produced using a known method. Specifically, such a production method as described below may be used.

First, a slurry for an all-solid-state secondary battery positive electrode containing a solid electrolyte and a positive electrode active material is applied onto a current collector and dried to form a positive electrode active material layer, to thereby produce a positive electrode for an all-solid-state secondary battery. Then, a slurry for an all-solid-state secondary battery solid electrolyte layer containing a solid electrolyte is applied to the surface of the positive electrode active material layer of the positive electrode for an all-solid-state secondary battery and dried to form a solid electrolyte layer. Further, similarly, a slurry for an all-solid-state secondary battery negative electrode containing a solid electrolyte and a negative electrode active material is applied to the surface of the solid electrolyte layer and dried to form a negative electrode active material layer. Finally, a negative electrode-side current collector (metal foil) is mounted on the surface of the negative electrode active material layer. Thus, a desired structure of an all-solid-state secondary battery may be obtained.

Alternatively, a solid electrolyte sheet is produced on a release PET film, and the resultant is bonded onto a positive electrode for an all-solid-state secondary battery or negative electrode for an all-solid-state secondary battery produced in advance. After that, the release PET is peeled off. Thus, a desired structure of an all-solid-state secondary battery may be obtained. It is appropriate that a method for the application of each of the above-mentioned compositions be in accordance with a conventional method. At this time, after the application of each of the slurry for an all-solid-state secondary battery positive electrode, the slurry for an all-solid-state secondary battery solid electrolyte layer, and the slurry for an all-solid-state secondary battery negative electrode, each slurry is preferably subjected to heating treatment. A heating temperature is preferably equal to or higher than the glass transition temperature of the polymer (A). Specifically, the heating temperature is preferably 30°C or more, more preferably 60°C or more, most preferably 100°C or more. The upper limit thereof is preferably 300°C or less, more preferably 250°C or less. When heating is performed within such temperature ranges, while the polymer (A) is softened, its shape can be maintained. Thus, satisfactory adhesiveness and lithium ion conductivity can be obtained in the all-solid-state secondary battery.

In addition, it is also preferred to perform pressurization while performing the heating. A pressurization pressure is preferably 5 kN/cm² or more, more preferably 10 kN/cm² or more, particularly preferably 20 kN/cm² or more. As used herein, the term "discharge capacity" refers to a value per weight of the active material of an electrode, and in a half cell, refers to a value per weight of the active material of its negative electrode.

### 5. Examples

The present invention is described below by way of Examples, but the present invention is not limited to these Examples. "Part(s)" and "%" in Examples and Comparative Examples are by mass unless otherwise stated.

### 5.1. Measurement Methods for Various Physical Property Values

In the following Examples and Comparative Examples, measurement methods for various physical property values are as described below.

### (1) Measurement of 1,2-Vinyl Bond Content

A 1,2-vinyl bond content (unit: mol%) in a polymer was determined by 500 MHz ¹H-NMR using deuterated chloroform as a solvent.

### (2) Bound Styrene Content

A bound styrene content (unit: %) in a polymer was determined by 500 MHz ¹H-NMR using deuterated chloroform as a solvent.

### (3) Weight Average Molecular Weight (Mw)

A weight average molecular weight was determined in terms of polystyrene from a retention time corresponding to the apex of the maximum peak of a GPC curve obtained using gel permeation chromatography (GPC) (product name: "HLC-8120GPC", manufactured by Tosoh Corporation).

### (Conditions for GPC)

·Column: product name: "GMHXL" (manufactured by Tosoh Corporation), 2 columns
·Column temperature: 40°C
·Mobile phase: tetrahydrofuran
·Flow rate: 1.0 ml/min
·Sample concentration: 10 mg/20 ml

### (4) Hydrogenation Ratio

The hydrogenation ratio of double bonds in a polymer was determined as follows: 500 MHz ¹H-NMR was measured using deuterated chloroform as a solvent, and a value was calculated from the peak area of the resultant spectrum on the basis of the calculation formula for α and was adopted as the hydrogenation ratio.

### (5) Quantification Method for Anti-aging Agent

10 g of a binder composition for an all-solid-state secondary battery obtained as described later was charged into 100 mL of stirred methanol to precipitate a polymer. The precipitated polymer was separated by filtration using a stainless-steel mesh, and the resultant filtrate was analyzed by liquid chromatography (HPLC). A product available under the product name "CBM-20A" from Shimadzu Corporation was used as a liquid chromatograph for the liquid chromatography. Conditions for HPLC were set as described below.

### (Conditions for HPLC)

·Flow rate: 1 mL/min
·Column oven temperature: 40°C
·Detector: absorbance detector (for measuring an absorbance at 280 nm)
·Eluent: mixed liquid of methanol (MeOH) and water (MeOH/water=9/1)

### 5.2. Synthesis Examples of Polymers

### <Synthesis Example 1>

An autoclave reactor having an internal volume of 50 liters, which had been purged with nitrogen, was loaded with 25 kg of cyclohexane serving as a hydrocarbon solvent, 75 g of tetrahydrofuran serving as a vinyl control agent, 600 g of styrene, and 1,800 g of 1,3-butadiene. After the temperature of the contents of the reactor had been adjusted to 10°C, 27.4 mmol of n-butyllithium serving as a polymerization initiator was added to initiate polymerization. The polymerization was performed under a thermally insulated condition, and the highest temperature reached 85°C. At the time point when a polymerization conversion rate of 99% was achieved (after a lapse of 26 minutes from the initiation of the polymerization), 100 g of 1,3-butadiene was added over 2 minutes, and the mixture was further polymerized for 3 minutes. After that, 4 mmol of tin tetrachloride was added, and the mixture was subjected to a reaction for 30 minutes. Further, 11.4 mmol of N,N-bis(trimethylsilyl)aminopropylmethyldiethoxysilane (BTADS) was added, and the mixture was subjected to a reaction for 30 minutes to provide a polymer solution containing a modified conjugated diene-based copolymer.

To the resultant polymer solution, 7.5 g of 2,6-di-tert-butyl-p-cresol was added, and then the solvent was removed by performing steam stripping using hot water adjusted to pH=9 with sodium hydroxide, to provide a rubbery modified conjugated diene-based copolymer. After that, the modified conjugated diene-based copolymer was dried using a heat roll controlled to a temperature of 110°C to provide a polymer (A-1). The polymer (A-1) had a weight average molecular weight (Mw) of 527×10³ and a 1,2-vinyl bond content of 41 mol%.

### <Synthesis Example 2>

An autoclave reactor having an internal volume of 50 liters, which had been purged with nitrogen, was loaded with 25 kg of cyclohexane serving as a hydrocarbon solvent, 30 g of tetrahydrofuran serving as a vinyl control agent, 600 g of styrene, and 1,800 g of 1,3-butadiene. After the temperature of the contents of the reactor had been adjusted to 10°C, 27.4 mmol of n-butyllithium serving as a polymerization initiator was added to initiate polymerization. The polymerization was performed under a thermally insulated condition, and the highest temperature reached 85°C. At the time point when a polymerization conversion rate of 99% was achieved (after a lapse of 26 minutes from the initiation of the polymerization), 100 g of 1,3-butadiene was added over 2 minutes, and the mixture was further polymerized for 3 minutes. After that, 2 mmol of tin tetrachloride was added, and the mixture was subjected to a reaction for 30 minutes. Further, 19.4 mmol of N-trimethylsilyl-N-methylaminopropylmethyldiethoxysilane (TMADS) was added, and the mixture was subjected to a reaction for 30 minutes to provide a polymer solution containing a modified conjugated diene-based copolymer.

After that, at a hydrogen gas supply pressure of 0.7 MPa (gauge pressure), the reaction solution was controlled to 90°C, and a hydrogenation catalyst mainly formed of titanocene dichloride was added to initiate a hydrogenation reaction. At the time point when the absorption of hydrogen in the modified conjugated diene-based copolymer reached a cumulative amount corresponding to a target hydrogenation ratio (85 mol%), the inside of the reaction vessel was purged with nitrogen to provide a polymer solution containing a hydrogenated modified conjugated diene-based copolymer. To the polymer solution, 7.5 g of 2,6-di-tert-butyl-p-cresol was added, and then the solvent was removed by performing steam stripping using hot water adjusted to pH=9 with sodium hydroxide, to provide a rubbery hydrogenated modified conjugated diene-based copolymer. After that, the hydrogenated modified conjugated diene-based copolymer was dried using a heat roll controlled to a temperature of 110°C to provide a polymer (A-2). The polymer (A-2) had a weight average molecular weight (Mw) of 324×10³, a 1,2-vinyl bond content of 31 mol%, and a hydrogenation ratio of 85 mol%.

### <Synthesis Example 3>

A polymer (A-3) was synthesized by appropriately applying the synthesis method of Synthesis Example 1 described above except that the kind and amount of each of the components to be used were set as shown in Table 1. The polymer (A-3) had a weight average molecular weight (Mw) of 331×10³ and a 1,2-vinyl bond content of 62 mol%.

### <Synthesis Example 4>

A polymer (A-4) was synthesized by appropriately applying the synthesis method of Synthesis Example 1 described above except that the kind and amount of each of the components to be used were set as shown in Table 1. The polymer (A-4) had a weight average molecular weight (Mw) of 284×10³ and a 1,2-vinyl bond content of 40 mol%.

### <Synthesis Example 5>

A polymer (A-5) was synthesized by appropriately applying the synthesis method of Synthesis Example 2 described above except that the kind and amount of each of the components to be used were set as shown in Table 1. The polymer (A-5) had a weight average molecular weight (Mw) of 278×10³, a 1,2-vinyl bond content of 42 mol%, and a hydrogenation ratio of 80 mol%.

### <Synthesis Example 6>

A polymer (A-6) was synthesized by appropriately applying the synthesis method of Synthesis Example 2 described above except that the kind and amount of each of the components to be used were set as shown in Table 1. The polymer (A-6) had a weight average molecular weight (Mw) of 354×10³, a 1,2-vinyl bond content of 41 mol%, and a hydrogenation ratio of 81 mol%.

### <Synthesis Example 7>

A polymer (A-7) was synthesized by appropriately applying the synthesis method of Synthesis Example 1 described above except that the kind and amount of each of the components to be used were set as shown in Table 1. The polymer (A-7) had a weight average molecular weight (Mw) of 311×10³ and a 1,2-vinyl bond content of 42 mol%.

### <Synthesis Example 8>

A polymer (A-8) was synthesized by appropriately applying the synthesis method of Synthesis Example 2 described above except that the kind and amount of each of the components to be used were set as shown in Table 1. The polymer (A-8) had a weight average molecular weight (Mw) of 299×10³, a 1,2-vinyl bond content of 43 mol%, and a hydrogenation ratio of 85 mol%.

### <Synthesis Example 9>

A polymer (A-9) was synthesized by appropriately applying the synthesis method of Synthesis Example 1 described above except that the kind and amount of each of the components to be used were set as shown in Table 1. The polymer (A-9) had a weight average molecular weight (Mw) of 387×10³ and a 1,2-vinyl bond content of 41 mol%.

### <Synthesis Example 10>

A polymer (A-10) was synthesized by appropriately applying the synthesis method of Synthesis Example 2 described above except that the kind and amount of each of the components to be used were set as shown in Table 1. The polymer (A-10) had a weight average molecular weight (Mw) of 349×10³, a 1,2-vinyl bond content of 41 mol%, and a hydrogenation ratio of 86 mol%.

### <Synthesis Example 11>

An autoclave reactor having an internal volume of 50 liters, which had been purged with nitrogen, was loaded with 25 kg of cyclohexane serving as a hydrocarbon solvent, 75 g of tetrahydrofuran serving as a vinyl control agent, 400 g of styrene, and 2,000 g of 1,3-butadiene. After the temperature of the contents of the reactor had been adjusted to 10°C, 27.4 mmol of n-butyllithium serving as a polymerization initiator was added to initiate polymerization. The polymerization was performed under a thermally insulated condition, and the highest temperature reached 85°C. At the time point when a polymerization conversion rate of 99% was achieved (after a lapse of 26 minutes from the initiation of the polymerization), 100 g of 1,3-butadiene was added over 2 minutes, and the mixture was further polymerized for 3 minutes to provide a polymer solution containing a conjugated diene-based copolymer.

To the resultant polymer solution, 7.5 g of 2,6-di-tert-butyl-p-cresol was added, and then the solvent was removed by performing steam stripping using hot water adjusted to pH=9 with sodium hydroxide, to provide a conjugated diene-based copolymer. After that, the conjugated diene-based copolymer was dried using a heat roll controlled to a temperature of 110°C to provide a polymer (A-11). The polymer (A-11) had a weight average molecular weight (Mw) of 223×10³ and a 1,2-vinyl bond content of 43 mol%.

### <Synthesis Example 12>

A polymer (A-12) was synthesized by appropriately applying the synthesis method of Synthesis Example 1 described above except that the kind and amount of each of the components to be used were set as shown in Table 1. The polymer (A-12) had a weight average molecular weight (Mw) of 342×10³ and a 1,2-vinyl bond content of 61 mol%.

### <Synthesis Example 13>

A polymer (A-13) was synthesized by appropriately applying the synthesis method of Synthesis Example 2 described above except that the kind and amount of each of the components to be used were set as shown in Table 1. The polymer (A-13) had a weight average molecular weight (Mw) of 505×10³, a 1,2-vinyl bond content of 41 mol%, and a hydrogenation ratio of 95 mol%.

### <Synthesis Example 14>

240 Parts of ion-exchanged water, 2.5 parts of a sodium alkylbenzenesulfonate serving as an emulsifier, 35 parts of acrylonitrile serving as a nitrile group-containing monomer, and 0.25 part of tert-dodecyl mercaptan serving as a chain transfer agent were loaded in the stated order into an autoclave reactor with a stirrer, and the inside thereof was purged with nitrogen. After that, 65 parts of 1,3-butadiene serving as a conjugated diene monomer was injected, 0.25 part of ammonium persulfate serving as a polymerization initiator was added, and the mixture was subjected to a polymerization reaction at a reaction temperature of 40°C. Thus, a polymer (A-14), which was a copolymer of acrylonitrile and 1,3-butadiene, was obtained. The polymerization conversion rate was 85%. The resultant aqueous dispersion of the copolymer was subjected to steam stripping to remove unreacted monomers, and was then concentrated under reduced pressure to be adjusted to a total solid content concentration of 40%. Next, solvent replacement was performed by adding 1,500 parts of mesitylene to the aqueous dispersion of the copolymer and concentrating the resultant under reduced pressure, and 1,500 ppm of Sumilizer GM and 1,500 ppm of IPPD were added to provide a 10.1% mesitylene solution of the polymer (A-14). The polymer (A-14) had a weight average molecular weight (Mw) of 214×10³ and a 1,2-vinyl bond content of 9 mol%.

### <Synthesis Example 15>

A 200 mL three-necked flask was loaded with 13.2 g of dicyclohexylmethane-4,4'-diisocyanate, 0.9 g of 1,4-butanediol, 24 g of DURANOL T5650J (manufactured by Asahi Kasei Corporation, mass average molecular weight: 800), and 1.5 g of 2,2-bis(hydroxymethyl)butanoic acid, and was further loaded with 56 g of tetrahydrofuran, and the contents were dissolved by heating at 60°C. 50 mg of NEOSTAN U-600 (product name, manufactured by Nitto Kasei Co., Ltd., inorganic bismuth) was added thereto as a catalyst over 10 minutes, and the mixture was heated and stirred at 60°C for 5 hours. To the resultant polymer solution, 10 mL of methanol was added, and the mixture was stirred at 60°C for 1 hour, followed by the termination of polymerization. The polymer solution was crystallized in 1 L of methanol, and the polymer solid was vacuum-dried at 80°C for 6 hours. The resultant polymer (A-15) had a weight average molecular weight of 38,000 and a glass transition temperature of 25°C. The polymer was redissolved in THF, and 1,500 ppm of 2,6-di-tert-butyl-p-cresol and 1,500 ppm of Sumilizer GS were added to give a 10.1% THF solution.

The resultant polymer (A-15) is a polyurethane represented by the following formula (8) (H12MDI/BG/DMBA/DURANOL T5650J=50/10/10/30 mol%).

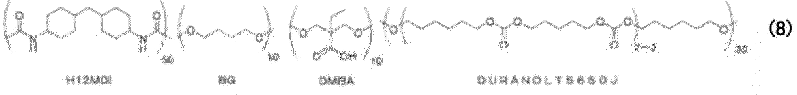

### <Synthesis Example 16>

Polymerization was performed under stirring at 60°C for 1 hour in the same manner as in Synthesis Example 15 except that 1.9 g of EPOL (trademark, manufactured by Idemitsu Kosan Co., Ltd.) was used in place of 10 mL of methanol. The resultant polymer solution was added dropwise to 500 mL of octane and dispersed therein. The dispersion was concentrated under reduced pressure, and then 1,500 ppm of 2,6-di-tert-butyl-p-cresol and 1,500 ppm of Sumilizer GS were added to provide 10.2% polyurethane latex dispersed in octane. The resultant polymer (A-16) had a weight average molecular weight of 17,000 and a glass transition temperature of 15°C, and the average particle diameter of the latex was 190 nm.

The resultant polymer (A-16) is a polyurethane latex represented by the following formula (9) (H12MDI/BG/DMBA/DURANOL 5650J/EPOL=50/10/10/27/3 mol%).

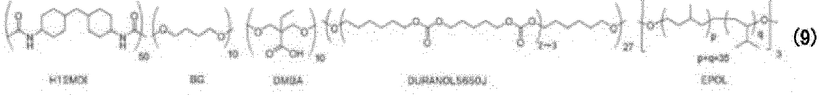

### 5.3. Example 1

### <Preparation of Binder Composition>

The polymer (A-1) obtained in Synthesis Example 1, and 2,6-di-tert-butyl-p-cresol serving as an anti-aging agent (B) at 400 ppm with respect to a binder composition immediately after preparation were added into anisole serving as a liquid medium (C), and the mixture was stirred at 90°C for 3 hours to dissolve the polymer (A-1) and the anti-aging agent (B) in anisole to prepare the binder composition. After that, the binder composition was filtered through a cartridge filter having a filter membrane having an average pore diameter of 3.00 µm (manufactured by ADVANTEC, all fluoropolymer cartridge filter, product name: "TCF-300-H5MF"), and then filtered through a magnetic filter (manufactured by TOK Engineering Co., Ltd., magnetic flux density: 8,000 gauss). The total solid content of the binder composition with respect to 100 mass% of the entirety thereof was 10.1%. In addition, the concentration of the anti-aging agent immediately after the preparation of the binder composition was measured by the above-mentioned method, and was found out to be 600 ppm.

### <Viscosity of Binder Composition>

The binder composition obtained in the foregoing was measured for its viscosity at 25°C with a B-type viscometer (manufactured by Toki Sangyo Co., Ltd.) at 50 rpm within 5 minutes after its preparation.

### <Storage Stability of Binder Composition>

500 g of the binder composition prepared in the foregoing (hereinafter sometimes referred to as "binder composition immediately after preparation") was filled into a 1 L CLEANBARRIER (trademark) bottle (barrier container for an ultrahigh purity solvent) commercially available from Aicello Chemical Co., Ltd. and stored in a thermostatic chamber set to 40°C for 6 months. The weight average molecular weight (Mw₁) of the binder composition after the 6 months of storage (hereinafter sometimes referred to as "binder composition after long-term storage") was measured by gel permeation chromatography (GPC: temperature condition: 50°C, column: "GMHHR-H" manufactured by Tosoh Corporation, in terms of polystyrene), and a change ratio ΔMw (%)=(Mw₁/Mw₀)×100 between the weight average molecular weight (Mw₀) before storage and the weight average molecular weight (Mw₁) after storage was calculated, followed by evaluation by the following criteria. A binder composition having a smaller change ratio ΔMw between the weight average molecular weights is more excellent in storage stability.

### (Evaluation Criteria)

A: The ΔMw is 97% or more and less than 103%.
B : The ΔMw is 95% or more and less than 97% or 103% or more and less than 105%.
C : The ΔMw is less than 95% or 105% or more.

The term "binder composition" in the following operations in Examples means any one of the above-mentioned "binder composition immediately after preparation" and the above-mentioned "binder composition after long-term storage". Table 1 below separately shows results indicating the characteristics of an all-solid-state secondary battery produced using the binder composition immediately after preparation ("Electrical storage device characteristics (immediately after production)" in Table 1 below) and results indicating the characteristics of an all-solid-state secondary battery produced using the binder composition after long-term storage ("Electrical storage device characteristics (after long-term storage)" in Table 1 below).

### <Preparation of Slurry for All-solid-state Secondary Battery Positive Electrode>

70 Parts by mass of LiCoO₂ (average particle diameter: 10 µm) serving as a positive electrode active material, 30 parts by mass of sulfide glass formed of Li₂S and P₂S₅ (Li₂S/P₂S₅=75 mol%/25 mol%, average particle diameter: 5 µm) serving as a solid electrolyte, 2 parts by mass of acetylene black serving as a conductive aid, and the binder composition prepared in the foregoing in an amount corresponding to a solid content of 2 parts by mass were mixed, and anisole was further added as a liquid medium to adjust the solid content concentration to 75%, followed by mixing in a planetary centrifugal mixer (manufactured by Thinky Corporation, Awatori Rentaro ARV-310) for 10 minutes to prepare a slurry for an all-solid-state secondary battery positive electrode.

### <Preparation of Slurry for All-solid-state Secondary Battery Solid Electrolyte Layer>

100 Parts by mass of sulfide glass formed of Li₂S and P₂S₅ (Li₂S/P₂S₅=75 mol%/25 mol%, average particle diameter: 5 µm) serving as a solid electrolyte and the binder composition prepared in the foregoing in an amount corresponding to a solid content of 2 parts by mass were mixed, and anisole was further added as a liquid medium to adjust the solid content concentration to 55%, followed by mixing in a planetary centrifugal mixer (manufactured by Thinky Corporation, Awatori Rentaro ARV-310) for 10 minutes to prepare a slurry for an all-solid-state secondary battery solid electrolyte layer.

### <Preparation of Slurry for All-solid-state Secondary Battery Negative Electrode>

65 Parts by mass of artificial graphite (average particle diameter: 20 µm) serving as a negative electrode active material, 35 parts by mass of sulfide glass formed of Li₂S and P₂S₅ (Li₂S/P₂S₅=75 mol%/25 mol%, average particle diameter: 5 µm) serving as a solid electrolyte, and the binder composition prepared in the foregoing in an amount corresponding to a solid content of 2 parts by mass were mixed, and anisole was further added as a liquid medium to adjust the solid content concentration to 65%, followed by mixing in a planetary centrifugal mixer (manufactured by Thinky Corporation, Awatori Rentaro ARV-310) for 10 minutes to prepare a slurry for an all-solid-state secondary battery negative electrode.

### <Evaluation of Slurry Stability>

The slurry for an all-solid-state secondary battery solid electrolyte layer obtained in the foregoing was measured for its viscosity at 25°C with a B-type viscometer (manufactured by Toki Sangyo Co., Ltd.) at 50 rpm within 5 minutes after its preparation, and the viscosity was represented by η₀. The slurry for an all-solid-state secondary battery solid electrolyte layer was stored in a thermostatic chamber at 25°C for 48 hours, and after the storage, its viscosity η₁ was measured with the B-type viscometer at 50 rpm. This measurement was also performed at a temperature of 25°C. A viscosity change ratio Δη (%)=(η₁/η₀)×100 was calculated, and evaluation was performed by the following criteria. A slurry having a smaller viscosity change ratio Δη is more excellent in slurry stability.

### (Evaluation Criteria)

AA: The Δη is 80% or more and less than 120%.
A : The Δη is 70% or more and less than 80% or 120% or more and less than 130%.
B : The Δη is 60% or more and less than 70% or 130% or more and less than 140%.
C : The Δη is less than 60% or 140% or more.

### <Production of Positive and Negative Electrodes, and Solid Electrolyte Layer>

The slurry for an all-solid-state secondary battery positive electrode prepared in the foregoing was applied onto aluminum foil by a doctor blade method, and was dried over 3 hours by evaporating anisole under reduced pressure at 120°C, to thereby produce an all-solid-state secondary battery positive electrode having formed thereon a positive electrode active material layer having a thickness of 0.1 mm.

The slurry for an all-solid-state secondary battery solid electrolyte prepared in the foregoing was applied onto a release PET film by the doctor blade method, and was dried over 3 hours by evaporating anisole under reduced pressure at 120°C, to thereby produce a solid electrolyte layer having a thickness of 0.1 mm.

The slurry for an all-solid-state secondary battery negative electrode prepared in the foregoing was applied onto stainless-steel foil by the doctor blade method, and was dried over 3 hours by evaporating anisole under reduced pressure at 120°C, to thereby produce an all-solid-state secondary battery negative electrode having formed thereon a negative electrode active material layer having a thickness of 0.1 mm.

### <Peeling Strength Test of All-solid-state Secondary Battery Positive Electrode>

With regard to the positive electrode active material layer formed on the aluminum foil of the all-solid-state secondary battery positive electrode obtained in the foregoing, a tape having a width of 20 mm was stuck on the positive electrode active material layer, and peeling strength at the time of the peeling thereof under the conditions of a peel angle of 90° and a peel speed of 50 mm/min was measured. Evaluation criteria are as described below. The result is shown in Table 1.

### (Evaluation Criteria)

AA: The peeling strength is 20 N/m or more.
A: The peeling strength is 10 N/m or more and less than 20 N/m.
B : The peeling strength is 5 N/m or more and less than 10 N/m.
C : The peeling strength is less than 5 N/m.

### <Flexibility Test of All-solid-state Secondary Battery Positive Electrode>

The aluminum foil side of a positive electrode test piece was placed along a metal rod having a diameter of 1.0 mm and wound around the metal rod, and whether or not the positive electrode active material layer was cracked and whether or not the wound end part was damaged were evaluated. Evaluation criteria are as described below. The result is shown in Table 1. A case in which damage to the positive electrode active material layer is not found indicates that the flexibility of the test piece is high and the process suitability for assembling an all-solid-state secondary battery is satisfactory.

### (Evaluation Criteria)

A: There is no crack in the positive electrode active material layer, and there is no damage to the wound end part.
B: There is no crack in the positive electrode active material layer, and there is damage to the wound end part.
C: There is a crack in the positive electrode active material layer.

### <Lithium Ion Conductivity Measurement of Solid Electrolyte Layer>

The solid electrolyte layer peeled from the PET film was sandwiched in a cell formed of two flat plates made of stainless steel, measurement was performed using an impedance analyzer, and lithium ion conductivity was calculated from a Nyquist plot. Evaluation criteria are as described below. The result is shown in Table 1. Higher lithium ion conductivity indicates that an all-solid-state secondary battery having more satisfactory battery performance can be obtained.

### (Evaluation Criteria)

AA: The lithium ion conductivity is 0.8×10⁻⁴ S/cm or more and 1.0×10⁻⁴ S/cm or less.
A: The lithium ion conductivity is 0.5×10⁻⁴ S/cm or more and less than 0.8×10⁻⁴ S/cm.
B: The lithium ion conductivity is 0.2×10⁻⁴ S/cm or more and less than 0.5×10⁻⁴ S/cm.
C: The lithium ion conductivity is less than 0.2×10⁻⁴ S/cm.

### <Production of All-solid-state Secondary Battery>

The all-solid-state secondary battery positive electrode produced in the foregoing was cut into a disc shape having a diameter of 13 mm, and the all-solid-state secondary battery negative electrode and the solid electrolyte layer peeled from the PET film were each cut into a disc shape having a diameter of 15 mm. Next, the cut all-solid-state secondary battery positive electrode was bonded to one surface of the cut solid electrolyte layer so that the surface of the positive electrode active material layer of the all-solid-state secondary battery positive electrode was brought into contact with the solid electrolyte layer. The cut all-solid-state secondary battery negative electrode was bonded to the other surface of the cut solid electrolyte layer so that the surface of the negative electrode active material layer of the all-solid-state secondary battery negative electrode was brought into contact with the solid electrolyte layer, and the resultant was pressurized (600 MPa, 1 minute) while being heated (120°C) through use of a heat press machine to produce a laminate for an all-solid-state secondary battery having the following laminated structure: aluminum foil/positive electrode active material layer/solid electrolyte layer/negative electrode active material layer/stainless-steel foil. Then, the thus produced laminate for an all-solid-state secondary battery was placed in a 2032-type coin case made of stainless steel having incorporated thereinto a spacer and a washer, and the 2032-type coin case was crimped to produce an all-solid-state secondary battery.

### <Cycle Life Characteristic (Capacity Retention Ratio)>

A charge-discharge test was performed using the all-solid-state secondary battery produced in the foregoing under an environment of 30°C. For charge and discharge, measurement was performed at a 0.1C rate in the potential range of from 4.2 V to 3.0 V. The charge and discharge at the 0.1C rate were repeated, and a capacity retention ratio after 20 cycles was calculated by the following equation, with the discharge capacity in the 1st cycle being represented by A (mAh/g) and the discharge capacity in the 20th cycle being represented by B (mAh/g). Evaluation criteria are as described below. The results are shown in Table 1.$Capacity retention ratio \left(%\right) after 20 cycles = \left(B/A\right) \times 100$

"C" in "C rate" represents a time rate, and is defined as (1/X)C=rated capacity (Ah)/X (h). X represents a period of time for charging or discharging the rated capacity amount of electricity. For example, 0.1C means that a current value is the rated capacity (Ah)/10 (h).

### (Evaluation Criteria)

AA: The capacity retention ratio is 95% or more and 100% or less.
A: The capacity retention ratio is 90% or more and less than 95%.
B: The capacity retention ratio is 85% or more and less than 90%.
C: The capacity retention ratio is less than 85%.

### <Yield>

The all-solid-state secondary battery produced in the foregoing was used and subjected to 20 cycles of repeated charge and discharge under an environment at 30°C at a 0.1C rate in the potential range of from 4.2 V to 3.0 V. After that, the battery was subjected to charge and discharge involving charging the battery under an environment at 0°C at the 0.1C rate to 4.2 V and then discharging the battery under an environment at 30°C at the 0.1C rate to 3.0 V, and the presence or absence of the occurrence of an abnormality was evaluated by the following criteria. The result is shown in Table 1. The "abnormality" means that the voltage of the battery was reduced by 0.1 V or more at the time of charge or at the time of discharge.

### (Evaluation Criteria)

AA: 9 or 10 out of 10 all-solid-state secondary batteries performed charge and discharge without any abnormality.
A: 7 or 8 out of 10 all-solid-state secondary batteries performed charge and discharge without any abnormality.
B: 4 to 6 out of 10 all-solid-state secondary batteries performed charge and discharge without any abnormality.
C: 0 to 3 out of 10 all-solid-state secondary batteries performed charge and discharge without any abnormality.

### 5.4. Examples 2 to 10 and Comparative Examples 1 to 6

In the same manner as in Example 1 described above except for using polymers shown in Table 1, binder compositions for all-solid-state secondary batteries were obtained, and slurries for all-solid-state secondary batteries, all-solid-state secondary battery electrodes, and all-solid-state secondary batteries were produced. Evaluations were performed in the same manner as in Example 1 described above. The respective results are shown in Table 1.

### 5.5. Evaluation Results

In Table 1 below, the compositions of the polymers used in Examples 1 to 10 and Comparative Examples 1 to 6, and the respective physical properties and the respective evaluation results are summarized.

**Table 1**

| Example No. | | | Examp le 1 | Examp le 2 | Examp le 3 | Examp le 4 | Examp le 5 | Examp le 6 | Examp le 7 | Examp le 8 | Examp le 9 | Examp le 10 | Comparati ve Example 1 | Comparati ve Example 2 | Comparati ve Example 3 | Comparati ve Example 4 | Comparati ve Example 5 | Comparati ve Example 6 |
|---|---|---|---|---|---|---|---|---|---|---|---|---|---|---|---|---|---|---|
| Polymer raw material (use amount) | Synthesis Example No. | | Synthe sis Examp le 1 | Synthe sis Examp le 2 | Synthe sis Examp le 3 | Synthe sis Examp le 4 | Synthe sis Examp le 5 | Synthe sis Examp le 6 | Synthe sis Examp le 7 | Synthe sis Examp le 8 | Synthe sis Examp le 9 | Synthe sis Examp le 10 | Synthesis Example 11 | Synthesis Example 12 | Synthesis Example 13 | Synthesis Example 14 | Synthesis Example 15 | Synthesis Example 16 |
| | Polym erizatio n initiato r (mmol) | n-Butyllithium | 27.4 | 27.4 | 27.4 | 27.4 | 27.4 | 27.4 | 27.4 | 27.4 | 27.4 | 27.4 | 27.4 | 27.4 | 27.4 | NBR | Polyuretha ne | Polyurea |
| | | Piperidine | | | | 21.2 | | 21.2 | | | 21.2 | 21.2 | | | | | | |
| | | Piperazine derivative "a" | | | | | | | 21.2 | | | | | | | | | |
| | | Piperazine derivative "b" | | | | | | | | 21.2 | | | | | | | | |
| | Vinyl control agent (g) | Tetrahydrofuran | 75 | 30 | 200 | 75 | 75 | 75 | 75 | 75 | 75 | 75 | 75 | 200 | 75 | | | |
| | Mono mer (g) | 1,3-Butadiene | 1,900 | 1,900 | 2,000 | 2,100 | 2,250 | 1,900 | 1,800 | 2,000 | 1,900 | 2,000 | 2,100 | 1,700 | 1,900 | | | |
| | | Styrene | 600 | 600 | *500* | 400 | 250 | 600 | 700 | *500* | 600 | *500* | 400 | 800 | 600 | | | |
| | Modifi er (mmol) | BTADS | 11.4 | | | | | 19.4 | | | 15.4 | 19.4 | | | | | | |
| | | TMADS | | 19.4 | | | | | 23.4 | | | | | | | | | |
| | | DATMS | | | 19.4 | | | | | 23.4 | | | | 19.4 | 11.4 | | | |
| | | Dichlorodimethylsi lane | | | | 13.7 | 13.7 | | | | | | | | | | | |
| | | Tin tetrachloride | 4 | 2 | 2 | | | 2 | 1 | 1 | 3 | 2 | | 2 | 4 | | | |
| | Anti-a ging agent (g) | BHT | 7.5 | 7.5 | 7.5 | 7.5 | 7.5 | 7.5 | 7.5 | 7.5 | 7.5 | 7.5 | 7.5 | 7.5 | 7.5 | | | |
| Polymer | Kind | | A-1 | A-2 | A-3 | A-4 | A-5 | A-6 | A-7 | A-8 | A-9 | A-10 | A-11 | A-12 | A-13 | A-14 | A-15 | A-16 |
| | 1,2-Vinyl bond content (mol%) | | 41 | 31 | 62 | 40 | 42 | 41 | 42 | 43 | 41 | 41 | 43 | 61 | 41 | 9 | - | - |
| | Bound styrene content (%) | | 24 | 24 | 20 | 16 | 10 | 24 | 28 | 20 | 24 | 20 | 16 | 32 | 24 | - | - | - |
| | Weight average molecular weight (Mw) | | 527,00 0 | 324,00 0 | 331,00 0 | 284,00 0 | 278,00 0 | 354,00 0 | 311,00 0 | 299,00 0 | 387,00 0 | 349,00 0 | 223,000 | 342,000 | *505,000* | 214,000 | 38,000 | 17,000 |
| | Hydrogenation ratio (mol%) | | - | 85 | - | - | 80 | 81 | - | 85 | - | 86 | - | - | 95 | - | - | - |
| Binder compositio | Liquid medium (C) | | Anisol e | DIBK | Toluen e | Mesityl ene | Anisol e | Anisol e | Mesityl ene | Toluen e | DIBK | Anisol e | Anisole | DIBK | Anisole | Mesitylen e | THF | Octane |
| n | Additi onally added anti-ag ing agent (loadin g amount , ppm) | BHT | 400 | | | | | | | 3,940 | | | | | | | 1,500 | 1,500 |
| | | MBMTBP | | 1,300 | | | | | | | 850 | 100 | | | | | | |
| | | Sumilizer GM | | | 2,500 | | | | | | | | | 6,950 | | 1,500 | | |
| | | Sumilizer GS | | | | 1,750 | | | | | | | | | | | 1,500 | 1,500 |
| | | IPPD | | | 750 | | 230 | | | | | | | | | 1,500 | | |
| | | TMDQ | | | | | | 2,530 | | | 850 | | | | | | | |
| | | ETMDQ | | | | | | | 1,460 | | | | | | | | | |
| | Total solid content (%) | | 10.1 | 10.1 | 10.2 | 10.1 | 10.1 | 10.1 | 10.1 | 10.2 | 10.1 | 10.2 | 10.1 | 10.2 | 10.2 | 10.1 | 10.1 | 10.2 |
| | Viscosity of composition (mPa·s) | | 1,850 | 1,550 | 1,240 | 2,920 | 2,650 | 3,400 | 3,650 | 3,510 | 3,780 | 3,920 | 1,250 | 1,310 | 1,590 | 780 | 650 | 30 |
| | Anti-aging agent concentration after additional addition (measured value, ppm) | | 600 | 1,510 | 3,450 | 1,960 | 420 | 2,740 | 1,650 | 4,150 | 1,900 | 310 | 190 | 7,150 | 190 | 2,940 | 2,980 | 2,990 |
| | Storage stability of binder composition | | A | A | A | A | A | A | A | A | A | A | A | A | C | A | B | B |
| Slurry characterist ics | Slurry stability | | A | A | AA | AA | A | AA | A | AA | AA | A | B | A | C | B | B | C |
| Electrode characterist ics | Peeling strength test | | AA | A | AA | A | A | AA | A | A | AA | AA | C | B | B | B | C | C |
| | Flexibility test | | A | A | A | A | A | A | A | A | A | A | C | B | C | B | C | C |
| Electrical storage device characterist ics (immediate ly after production) | Lithium ion conductivity | | A | A | AA | AA | A | AA | A | AA | AA | A | C | C | C | C | B | B |
| | Cycle life characteristic (capacity retention ratio) | | A | A | AA | AA | A | AA | A | AA | AA | A | C | C | C | C | B | B |
| | Yield | | A | A | AA | AA | A | AA | A | AA | AA | A | B | B | C | B | B | B |
| Electrical storage device characterist ics (after long-term storage) | Cycle life characteristic (capacity retention ratio) | | A | A | AA | AA | A | AA | A | AA | AA | A | C | C | C | C | C | C |
| | Yield | | A | A | AA | AA | A | AA | A | AA | AA | A | B | B | C | C | C | C |
| Anti-aging agent concentration in binder composition after long-term storage (measured value, ppm) | | | 330 | 1,220 | 3,140 | 1,680 | 160 | 2,450 | 1,340 | 3,810 | 1,600 | 20 | 10 | 6,820 | 0 | 2,420 | 2,640 | 2,530 |

The abbreviations or the product names in Table 1 above represent the following compounds, respectively.

### <Polymerization Initiator>

· Piperazine derivative "a": N-trimethylsilyl piperazine
· Piperazine derivative "b": N'-[2-N,N-bis(trimethylsilyl)aminoethyl]piperazine <Modifier>
·B TADS: N,N-bis(trimethylsilyl)aminopropylmethyldiethoxysilane
·TMADS: N-trimethylsilyl-N-methylaminopropylmethyldiethoxysilane
·DATMS: [3-(N,N-dimethylamino)propyl]trimethoxysilane

### <Anti-aging Agent>

·BHT: 2,6-di-tert-butyl-p-cresol
·MBMTBP: 2,2'-methylenebis(4-methyl-6-tert-butylphenol)
·Sumilizer GM: 2-tert-butyl-6-(3-tert-butyl-2-hydroxy-5-methylbenzyl)-4-methylphenyl acrylate
·Sumilizer GS: 2-[1-(2-hydroxy-3,5-di-tert-pentylphenyl)ethyl]-4,6-di-tert-pentylphenyl acrylate
·IPPD: N-isopropyl-N'-phenylbenzene-1,4-diamine
·TMDQ: 2,2,4-trimethyl-1,2-dihydroquinoline polymer
·ETMDQ: 6-ethoxy-2,2,4-trimethyl-1,2-dihydroquinoline

### <Liquid Medium (C)>

·DIBK: diisobutyl ketone
·THF: tetrahydrofuran

It was recognized from the results of Table 1 that the binder composition for an all-solid-state secondary battery of each of Examples 1 to 10 was excellent in long-term storage stability. In addition, it was recognized from the results of Table 1 that, when any one of the binder compositions immediately after preparation and after long-term storage of Examples 1 to 10 was used, an all-solid-state secondary battery excellent in lithium ion conductivity and capable of achieving a satisfactory cycle life characteristic even under a high voltage was able to be produced.

In addition, in each of Examples 1 to 10, a slurry obtained by incorporating an active material and a solid electrolyte into the binder composition for an all-solid-state secondary battery is used as each of the slurries for all-solid-state secondary battery electrodes. In addition, it was recognized that, in the active material layer formed from the slurry, sufficient binding properties were obtained for the polymer between both the active material and the solid electrolyte with no occurrence of detachment, cracks, or the like of the active material and the solid electrolyte due to the active material layer itself becoming brittle at the time of the measurement of the peeling strength. Accordingly, it is presumed that: the active material layer to be formed by using the binder composition for an all-solid-state secondary battery according to the present invention obtains sufficient adhesiveness to the solid electrolyte layer; high workability is obtained even when the solid electrolyte layer is formed by using the binder composition for an all-solid-state secondary battery according to the present invention; and the solid electrolyte thus formed obtains sufficient adhesiveness to the active material layer.

## Claims

1. A binder composition for an all-solid-state secondary battery, comprising:
a polymer (A) having an aromatic vinyl unit based on an aromatic vinyl compound and a conjugated diene unit based on a conjugated diene compound;
an anti-aging agent (B) at 200 ppm or more and 5,000 ppm or less with respect to a total mass of the binder composition for an all-solid-state secondary battery; and
a liquid medium (C),
wherein the anti-aging agent (B) contains at least one kind selected from the group consisting of: a phenol-based anti-aging agent; and an amine-based anti-aging agent,
wherein the polymer (A) has a bound styrene content of from 5% to 40%, and a value α, which is represented by the following equation (i), of less than 0.9, where "p", "q", "r", and "s" represent constituent ratios (molar ratios) of a structural unit represented by the following formula (1), a structural unit represented by the following formula (2), a structural unit represented by the following formula (3), and a structural unit represented by the following formula (4) in the polymer, respectively. $α = \left(p+\left(0.5\times r\right)\right) / \left(p+q+\left(0.5\times r\right)+s\right)$

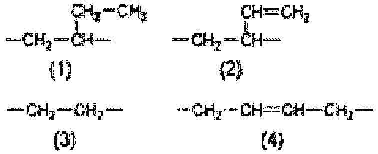

2. The binder composition for an all-solid-state secondary battery according to claim 1, wherein the polymer (A) has a unit based on a modifier containing at least one kind of atom selected from the group consisting of: a nitrogen atom; an oxygen atom; a silicon atom; a germanium atom; and a tin atom.

3. The binder composition for an all-solid-state secondary battery according to claim 1 or 2, wherein the liquid medium (C) is at least one kind selected from the group consisting of: an aliphatic hydrocarbon; an alicyclic hydrocarbon; an aromatic hydrocarbon; ketones; esters; and ethers.

4. The binder composition for an all-solid-state secondary battery according to any one of claims 1 to 3, wherein the polymer (A) is dissolved in the liquid medium (C).

5. A slurry for an all-solid-state secondary battery, comprising:
the binder composition for an all-solid-state secondary battery of any one of claims 1 to 4; and
a solid electrolyte.

6. The slurry for an all-solid-state secondary battery according to claim 5, wherein the slurry for an all-solid-state secondary battery comprises, as the solid electrolyte, a sulfide-based solid electrolyte or an oxide-based solid electrolyte.

7. An all-solid-state secondary battery, comprising at least:
a positive electrode active material layer;
a solid electrolyte layer; and
a negative electrode active material layer,
wherein at least any one of the positive electrode active material layer, the solid electrolyte layer, and the negative electrode active material layer is a layer formed by applying and drying the slurry for an all-solid-state secondary battery of claim 5 or 6.

8. A solid electrolyte sheet for an all-solid-state secondary battery, comprising:
a substrate; and
a layer formed on the substrate by applying and drying the slurry for an all-solid-state secondary battery of claim 5 or 6.

9. A method of producing a solid electrolyte sheet for an all-solid-state secondary battery, comprising a step including applying the slurry for an all-solid-state secondary battery of claim 5 or 6 onto a substrate and drying the slurry.

10. A method of producing an all-solid-state secondary battery, comprising producing an all-solid-state secondary battery via the method of producing a solid electrolyte sheet for an all-solid-state secondary battery of claim 9.

## Patentansprüche

1. Bindemittelzusammensetzung für eine Festkörper-Sekundärbatterie, umfassend:
ein Polymer (A) mit einer aromatischen Vinyleinheit auf der Basis einer aromatischen Vinylverbindung und einer konjugierten Dien-Einheit auf der Basis einer konjugierten Dienverbindung;
ein Alterungsschutzmittel (B) in einer Menge von 200 ppm oder mehr und 5.000 ppm oder weniger, bezogen auf die Gesamtmasse der Bindemittelzusammensetzung für eine Festkörper-Sekundärbatterie; und
ein flüssiges Medium (C),
wobei das Alterungsschutzmittel (B) mindestens eine Art enthält, ausgewählt aus der Gruppe bestehend aus: einem Alterungsschutzmittel auf Phenolbasis; und einem Alterungsschutzmittel auf Aminbasis,
wobei das Polymer (A) einen Gehalt an gebundenem Styrol von 5% bis 40% und einen Wert α, der durch die folgende Gleichung (i) dargestellt wird, von weniger als 0,9 aufweist, wobei "p", "q", "r" und "s" die Anteile (Molverhältnisse) einer durch die folgende Formel (1) dargestellten Struktureinheit, einer durch die folgende Formel (2) dargestellten Struktureinheit, einer durch die folgende Formel (3) dargestellten Struktureinheit bzw. einer durch die folgende Formel (4) dargestellten Struktureinheit im Polymer darstellen. $α = \left(p+\left(0,5\times r\right)\right) / \left(p+q+\left(0,5\times r\right)+s\right)$

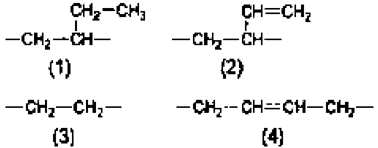

2. Bindemittelzusammensetzung für eine Festkörper-Sekundärbatterie nach Anspruch 1, wobei das Polymer (A) eine Einheit auf der Basis eines Modifikators aufweist, der mindestens eine Art von Atom enthält, ausgewählt aus der Gruppe bestehend aus: einem Stickstoffatom; einem Sauerstoffatom; einem Siliciumatom; einem Germaniumatom; und einem Zinnatom.

3. Bindemittelzusammensetzung für eine Festkörper-Sekundärbatterie nach Anspruch 1 oder 2, wobei das flüssige Medium (C) mindestens eine Art ist, ausgewählt aus der Gruppe bestehend aus: einem aliphatischen Kohlenwasserstoff; einem alicyclischen Kohlenwasserstoff; einem aromatischen Kohlenwasserstoff; Ketonen; Estern; und Ethern.

4. Bindemittelzusammensetzung für eine Festkörper-Sekundärbatterie nach einem der Ansprüche 1 bis 3, wobei das Polymer (A) in dem flüssigen Medium (C) gelöst ist.

5. Aufschlämmung für eine Festkörper-Sekundärbatterie, umfassend:
die Bindemittelzusammensetzung für eine Festkörper-Sekundärbatterie nach einem der Ansprüche 1 bis 4; und
einen Festelektrolyten.

6. Aufschlämmung für eine Festkörper-Sekundärbatterie nach Anspruch 5, wobei die Aufschlämmung für eine Festkörper-Sekundärbatterie als Festelektrolyten einen Festelektrolyten auf Sulfidbasis oder einen Festelektrolyten auf Oxidbasis umfasst.

7. Festkörper-Sekundärbatterie, umfassend mindestens:
eine aktive Materialschicht der positiven Elektrode;
eine Festelektrolytschicht; und
eine aktive Materialschicht der negativen Elektrode,
wobei mindestens eine der aktiven Materialschichten der positiven Elektrode, der Festelektrolytschicht und der aktiven Materialschicht der negativen Elektrode eine Schicht ist, die durch Auftragen und Trocknen der Aufschlämmung für eine Festkörper-Sekundärbatterie nach Anspruch 5 oder 6 gebildet wird.

8. Festelektrolytblatt für eine Festkörper-Sekundärbatterie, umfassend:
ein Substrat; und
eine Schicht, die auf dem Substrat durch Auftragen und Trocknen der Aufschlämmung für eine Festkörper-Sekundärbatterie nach Anspruch 5 oder 6 gebildet wird.

9. Verfahren zur Herstellung eines Festelektrolytblatts für eine Festkörper-Sekundärbatterie, umfassend einen Schritt, bei dem die Aufschlämmung für eine Festkörper-Sekundärbatterie nach Anspruch 5 oder 6 auf ein Substrat aufgetragen und die Aufschlämmung getrocknet wird.

10. Verfahren zur Herstellung einer Festkörper-Sekundärbatterie, umfassend die Herstellung einer Festkörper-Sekundärbatterie mittels des Verfahrens zur Herstellung eines Festelektrolytblatts für eine Festkörper-Sekundärbatterie nach Anspruch 9.

## Revendications

1. Composition de liant pour batterie secondaire entièrement solide, comprenant :
un polymère (A) ayant une unité vinylique aromatique à base d'un composé vinylique aromatique et une unité diénique conjuguée à base d'un composé diénique conjugué ;
un agent antivieillissement (B) à hauteur de 200 ppm ou plus et de 5 000 ppm ou moins par rapport à une masse totale de la composition de liant pour batterie secondaire entièrement solide ; et
un milieu liquide (C),
dans laquelle l'agent antivieillissement (B) contient au moins un type choisi dans le groupe constitué par : un agent antivieillissement à base de phénol ; et un agent antivieillissement à base d'amine,
dans laquelle le polymère (A) a une teneur en styrène lié allant de 5 % à 40 % et une valeur de α, qui est représenté par l'équation (i) suivante, inférieure à 0,9, « p », « q », « r » et « s » représentant des proportions constitutives (proportions molaires) dans le polymère d'une unité de structure représentée par la formule (1) suivante, d'une unité de structure représentée par la formule (2) suivante, d'une unité de structure représentée par la formule (3) suivante et d'une unité de structure représentée par la formule (4) suivante, respectivement. $α = \left(p+\left(0,5\times r\right)\right) / \left(p+q+\left(0,5\times r\right)+s\right)$

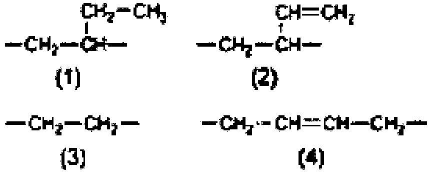

2. Composition de liant pour batterie secondaire entièrement solide selon la revendication 1, dans laquelle le polymère (A) a une unité à base de modificateur contenant au moins un type d'atome choisi dans le groupe constitué par : un atome d'azote ; un atome d'oxygène ; un atome de silicium ; un atome de germanium ; et un atome d'étain.

3. Composition de liant pour batterie secondaire entièrement solide selon la revendication 1 ou 2, dans laquelle le milieu liquide (C) est au moins un type choisi dans le groupe constitué par : un hydrocarbure aliphatique ; un hydrocarbure alicyclique ; un hydrocarbure aromatique ; les cétones ; les esters ; et les éthers.

4. Composition de liant pour batterie secondaire entièrement solide selon l'une quelconque des revendications 1 à 3, dans laquelle le polymère (A) est dissous dans le milieu liquide (C).

5. Suspension épaisse pour batterie secondaire entièrement solide, comprenant :
la composition de liant pour batterie secondaire entièrement solide selon l'une quelconque des revendications 1 à 4 ; et
un électrolyte solide.

6. Suspension épaisse pour batterie secondaire entièrement solide selon la revendication 5, la suspension épaisse pour batterie secondaire entièrement solide comprenant, en tant qu'électrolyte solide, un électrolyte solide à base de sulfure ou un électrolyte solide à base d'oxyde.

7. Batterie secondaire entièrement solide, comprenant au moins :
une couche de matériau actif d'électrode positive ;
une couche d'électrolyte solide ; et
une couche de matériau actif d'électrode négative,
dans laquelle au moins l'une quelconque de la couche de matériau actif d'électrode positive, de la couche d'électrolyte solide et de la couche de matériau actif d'électrode négative est une couche formée par application et séchage de la suspension épaisse pour batterie secondaire entièrement solide selon la revendication 5 ou 6.

8. Feuille d'électrolyte solide pour batterie secondaire entièrement solide, comprenant :
un substrat ; et
une couche formée sur le substrat par application et séchage de la suspension épaisse pour batterie secondaire entièrement solide selon la revendication 5 ou 6.

9. Procédé de production d'une feuille d'électrolyte solide pour batterie secondaire entièrement solide, comprenant une étape comportant l'application de la suspension épaisse pour batterie secondaire entièrement solide selon la revendication 5 ou 6 sur un substrat et le séchage de la suspension épaisse.

10. Procédé de production d'une batterie secondaire entièrement solide, comprenant la production d'une batterie secondaire entièrement solide par le biais du procédé de production d'une feuille d'électrolyte solide pour batterie secondaire entièrement solide selon la revendication 9.
